(19) Europäisches Patentamt
European Patent Office
Office européen des brevets

(11) **EP 4 568 204 A1**

(12) **EUROPEAN PATENT APPLICATION**
published in accordance with Art. 153(4) EPC

(43) Date of publication:
**11.06.2025 Bulletin 2025/24**

(21) Application number: **23864610.3**

(22) Date of filing: **06.09.2023**

(51) International Patent Classification (IPC):
**H04L 27/04** (2006.01)     **H04W 52/02** (2009.01)

(52) Cooperative Patent Classification (CPC):
**H04L 27/04; H04W 52/02**

(86) International application number:
**PCT/CN2023/117153**

(87) International publication number:
**WO 2024/055878 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022  CN 202211132097**
**23.09.2022  CN 202211167586**

(71) Applicant: **Huawei Technologies Co., Ltd.**
**Shenzhen, Guangdong 518129 (CN)**

(72) Inventors:
• **XUE, Yifan**
**Shenzhen, Guangdong 518129 (CN)**
• **XUE, Lixia**
**Shenzhen, Guangdong 518129 (CN)**
• **LI, Qiang**
**Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **COMMUNICATION METHOD AND COMMUNICATION APPARATUS**

(57)     A communication method and a communication apparatus are provided. The method includes: receiving a wake-up signal in N time units, where the wake-up signal includes N1 first signals and N2 second signals, the first signal indicates a first bit value, the second signal indicates a second bit value, a signal power of the first signal is not 0, a signal power of the second signal is 0, each first signal occupies one time unit, each second signal occupies one time unit, the first signal includes a part whose power is 0 and a part whose power is not 0, a time length of the part whose signal power is not 0 in at least one time unit is greater than 0 and less than a length of the time unit, N is an integer greater than 1, N1 and N2 are integers greater than or equal to 0, and N1+N2=N; and demodulating, by a terminal device, the wake-up signal. Based on the design, the time length of the part whose power is not 0 in the first signal is shortened, and energy of the first signal is concentrated in a shorter time, so that a signal-to-noise ratio in the shorter time is increased, to improve demodulation performance.

900

A terminal device receives a wake-up signal from a network device in N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, a time length occupied by a part whose signal power is not 0 in the first signal in at least one of the N time units is greater than 0 and less than or equal to a length of the time unit, N is an integer greater than 1, N1 and N2 are integers greater than 0 or equal to 0, and N1+N2=N

910

The terminal device demodulates the wake-up signal

920

**FIG. 9**

## Description

This application claims priorities to Chinese Patent Application No. 202211132097.2, filed with the China National Intellectual Property Administration on September 16, 2022 and entitled "COMMUNICATION METHOD", and to Chinese Patent Application No. 202211167586.1, filed with the China National Intellectual Property Administration on September 23, 2022 and entitled "COMMUNICATION METHOD AND COMMUNICATION APPARATUS", both of which are incorporated herein by reference in their entireties.

## TECHNICAL FIELD

This application relates to the communication field, and more specifically, to a communication method and a communication apparatus.

## BACKGROUND

A terminal device may receive a wake-up signal through a separate low-power small circuit, for example, a wake-up receiver (wake-up receiver, WUR), and a main receiver may be in a deep sleep state. After the terminal device detects the wake-up signal through the WUR, the terminal device triggers wake-up of the main receiver. After the main receiver is woken up, the terminal device may perform data transmission through the main receiver.

A common scheme of modulating the wake-up signal is on-off keying (on-off keying, OOK) modulation. The OOK modulation mainly refers to modulating information depending on whether a signal is sent, and a corresponding wake-up circuit may receive the signal by using an envelope detection method. In an OOK modulation technology, demodulation can be implemented by a receiver with extremely low complexity, so that an objective of low power consumption of the wake-up circuit can be achieved. Because only amplitude information of the signal is used in the OOK modulation, if the wake-up signal is modulated by using OOK, although power consumption of the receiver can be reduced, demodulation performance is poor. How to improve performance of demodulating a wake-up signal modulated by using OOK is a problem to be resolved.

## SUMMARY

This application provides a communication method and a communication apparatus, to improve performance of demodulating a wake-up signal modulated by using OOK.

According to a first aspect, a communication method is provided. The method may be performed by a terminal device, or may be performed by a component (for example, a chip or a circuit) of a terminal device. This is not limited herein. For ease of description, an example in which the method is performed by a terminal device is used for description below.

The method may include: The terminal device receives a wake-up signal from a network device in N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, the first signal includes a part whose power is 0 and a part whose power is not 0, a time length occupied by the part whose signal power is not 0 in the first signal in at least one of the N time units is greater than 0 and less than a length of the time unit, N is an integer greater than 1, N1 and N2 are integers greater than 0 or equal to 0, and N1+N2=N; and the terminal device demodulates the wake-up signal.

Based on the foregoing technical solution, the first signal indicates the first bit value, the second signal indicates the second bit value, the signal power of the first signal is not 0, and the signal power of the second signal is 0. Therefore, it can be learned that a modulation scheme of the wake-up signal is on-off keying (on-off keying, OOK) modulation. In addition, based on the design, a time length of the part whose power is not 0 in the first signal in one time unit is shortened, that is, the time length occupied by the part whose power is not 0 in the first signal is designed to be greater than 0 and less than a length of the time unit. In this way, in comparison with a solution in which the time length occupied by the part whose power is not 0 in the first signal is the length of the time unit, energy of the first signal can be concentrated in a shorter time, so that a signal-to-noise ratio in the short time is increased, to improve performance of demodulating the wake-up signal.

With reference to the first aspect, in some implementations of the first aspect, the method further includes: The terminal device receives indication information from the network device, where the indication information indicates time information of the first signal, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

Optionally, that the terminal device demodulates the wake-up signal includes: The terminal device demodulates the wake-up signal based on the time information of the first signal.

Based on the foregoing technical solution, the network device may configure the time information of the first signal, and indicate the time information to the terminal device. In this way, the terminal device may demodulate the wake-up signal based on the time length occupied by the part whose power is not 0 in the first signal in one time unit. For example, if the terminal device knows the time length occupied by the part whose power is not 0 in the first signal in one time unit, the terminal device may select a time interval corresponding to demodulation. If the terminal device does not know the time length occupied by the part whose power is not 0 in the first signal in one time unit, the terminal device uses the entire time unit as a time interval corresponding to demodulation, and more noise energy is introduced. Therefore, the terminal device demodulates the wake-up signal based on the time length occupied by the part whose power is not 0 in the first signal in one time unit, to avoid introducing more noise energy, so as to improve performance of demodulating the wake-up signal modulated by using OOK.

With reference to the first aspect, in some implementations of the first aspect, the indication information is period value configuration information of a synchronization signal, and there is an association relationship between a period value of the synchronization signal and the time information of the first signal.

Based on the foregoing technical solution, there is an association relationship between the period value of the synchronization signal and the time information of the first signal. Therefore, the terminal device may determine the time information of the first signal based on the period value of the synchronization signal. In this way, the network device indicates the period value of the synchronization signal to the terminal device, so that the terminal device can learn of the period value of the synchronization signal, and the terminal device can further determine, based on the association relationship between the period value of the synchronization signal and the time information of the first signal, the time information of the first signal corresponding to the period value, to reduce signaling overheads. In addition, because the part whose signal power is not 0 in the first signal has different anti-time-offset capabilities when occupying different time lengths, a period of the synchronization signal affects a maximum time-offset value. Therefore, a balance between demodulation performance and anti-time-offset can be implemented by establishing the association relationship between the period value of the synchronization signal and the time information of the first signal.

With reference to the first aspect, in some implementations of the first aspect, the method further includes: The terminal device periodically receives a synchronization signal from the network device, where there is an association relationship between a period value of the synchronization signal and time information of the first signal, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

Based on the foregoing technical solution, there is an association relationship between the period value of the synchronization signal and the time information of the first signal. In this way, the terminal device may determine the time information of the first signal based on the period value of the synchronization signal, or may determine the period value of the synchronization signal based on the time information of the first signal. In this way, the network device indicates the period value of the synchronization signal or the time information of the first signal to the terminal device, so that the terminal device can learn of both the period value of the synchronization signal and the time information of the first signal, and signaling overheads can be reduced. In addition, because the part whose signal power is not 0 in the first signal has different anti-time-offset capabilities when occupying different time lengths, a period of the synchronization signal affects a maximum time-offset value. Therefore, a balance between demodulation performance and anti-time-offset can be implemented by establishing the association relationship between the period value of the synchronization signal and the time information of the first signal.

With reference to the first aspect, in some implementations of the first aspect, the method further includes: The terminal device receives configuration information from the network device, where the configuration information includes an offset value of the part whose signal power is not 0 in the first signal in the time unit, or an offset value of the part whose signal power is 0 in the first signal in the time unit. The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

Based on the foregoing technical solution, the network device may configure the offset value of the part whose power is not 0 in the first signal relative to the time unit, or configure the offset value of the part whose power is 0 in the first signal relative to the time unit. In this way, the terminal device can learn, based on the offset value, a location of the part whose power is not 0 in the first signal in the time unit, to determine the time interval corresponding to demodulation, and increase a signal-to-noise ratio of a signal in the time interval corresponding to demodulation, so as to improve demodulation performance.

According to a second aspect, a communication method is provided. The method may be performed by a network device, or may be performed by a component (for example, a chip or a circuit) of a network device. This is not limited herein. For ease of description, an example in which the method is performed by a network device is used for description below.

The method may include: The network device generates a wake-up signal; and the network device sends the wake-up signal in N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, the first signal includes a part whose power is 0 and a part whose power is not 0, a time length of the part whose signal power is not 0 in the first signal in at least one of the N time units is greater than 0 and less than a length of the time unit, N is an integer greater than 1, N1 and N2 are integers greater than 0 or equal to 0, and N1+N2=N.

With reference to the second aspect, in some implementations of the second aspect, the method further includes: The network device sends indication information, where the indication information indicates time information of the first signal, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

With reference to the second aspect, in some implementations of the second aspect, the indication information is period value configuration information of a synchronization signal, and there is an association relationship between a period value of the synchronization signal and the time information of the first signal.

With reference to the second aspect, in some implementations of the second aspect, the method further includes: The network device periodically sends a synchronization signal, where there is an association relationship between a period value of the synchronization signal and time information of the first signal, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

With reference to the second aspect, in some implementations of the second aspect, the method further includes: The network device sends configuration information, where the configuration information includes an offset value of the part whose signal power is not 0 in the first signal in the time unit, or an offset value of the part whose signal power is 0 in the first signal in the time unit. The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

For beneficial effects of the second aspect and the possible designs, refer to the related descriptions of the first aspect. Details are not described herein again.

According to a third aspect, a communication method is provided. The method may be performed by a terminal device, or may be performed by a component (for example, a chip or a circuit) of a terminal device. This is not limited herein. For ease of description, an example in which the method is performed by a terminal device is used for description below.

The method may include: The terminal device receives indication information from a network device, where the indication information indicates time information of a first signal, a time length of a part whose signal power is not 0 in the first signal in at least one of N time units is greater than 0 and is less than or equal to a length of the time unit, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by a part whose signal power is 0 in the first signal to the length of the time unit, and the time length occupied by the part whose signal power is 0 in the first signal; and the terminal device receives a wake-up signal from the network device in the N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, N is an integer greater than 1, N1 and N2 are integers greater than 0 or equal to 0, and N1+N2=N.

Optionally, the method further includes: The terminal device demodulates the wake-up signal based on the time information of the first signal.

Based on the foregoing technical solution, the network device may configure the time information of the first signal, and indicate the time information to the terminal device. In this way, the terminal device may demodulate the wake-up signal based on the time length occupied by the part whose power is not 0 in the first signal in one time unit. For example, if the terminal device knows the time length occupied by the part whose power is not 0 in the first signal in one time unit, the terminal device may select a time interval corresponding to demodulation. If the terminal device does not know the time length occupied by the part whose power is not 0 in the first signal in one time unit, the terminal device selects to perform demodulation in the entire time unit, and more noise energy is introduced. Therefore, the terminal device demodulates the wake-up signal based on the time length occupied by the part whose power is not 0 in the first signal in one time unit, to avoid introducing more noise energy, so as to improve performance of demodulating the wake-up signal. In addition, the time length of the part whose signal power is not 0 in the first signal in at least one of the N time units is greater than 0 and is less than or equal to the length of the time unit. In other words, a network side or a protocol may predefine (or support) at least two types of time lengths occupied by the part whose signal power is not 0 in the first signal. During actual transmission, the network device may select an appropriate length based on an actual communication status or an actual communication scenario, and notify the terminal device of the time length.

With reference to the third aspect, in some implementations of the third aspect, the indication information is period value configuration information of a synchronization signal, and there is an association relationship between a period value of the synchronization signal and the time information of the first signal.

Based on the foregoing technical solution, there is an association relationship between the period value of the synchronization signal and the time information of the first signal. Therefore, the terminal device may determine the time information of the first signal based on the period value of the synchronization signal. In this way, the network device indicates the period value of the synchronization signal to the terminal device, so that the terminal device can learn of the period value of the synchronization signal, and the terminal device can further determine, based on the association relationship between the period value of the synchronization signal and the time information of the first signal, the time information of the first signal corresponding to the period value, to reduce signaling overheads. In addition, because the part whose signal power is not 0 in the first signal has different anti-time-offset capabilities when occupying different time lengths, a period of the synchronization signal affects a maximum time-offset value. Therefore, a balance between demodulation performance and anti-time-offset can be implemented by establishing the association relationship between the period value of the synchronization signal and the time information of the first signal.

With reference to the third aspect, in some implementations of the third aspect, the method further includes: The terminal device receives configuration information from the network device, where the configuration information includes an offset value of the part whose signal power is not 0 in the first signal in the time unit, or an offset value of the part whose signal power is 0 in the first signal in the time unit. The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

Based on the foregoing technical solution, the network device may configure the offset value of the part whose power is not 0 in the first signal relative to the time unit, or configure the offset value of the part whose power is 0 in the first signal relative to the time unit. In this way, the terminal device can learn, based on the offset value, a location of the part whose power is not 0 in the first signal in the time unit, to determine the time interval corresponding to demodulation, and increase a signal-to-noise ratio of a signal in the time interval corresponding to demodulation, so as to improve demodulation performance.

According to a fourth aspect, a communication method is provided. The method may be performed by a network device, or may be performed by a component (for example, a chip or a circuit) of a network device. This is not limited herein.

For ease of description, an example in which the method is performed by a network device is used for description below.

The method may include: The network device sends indication information, where the indication information indicates time information of a first signal, a time length of a part whose signal power is not 0 in the first signal in at least one of N time units is greater than 0 and is less than or equal to a length of the time unit, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by a part whose signal power is 0 in the first signal to the length of the time unit, and the time length occupied by the part whose signal power is 0 in the first signal; and the network device sends a wake-up signal in the N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, N is an integer greater than 1, N1 and N2 are integers greater than 0 or equal to 0, and N1+N2=N.

With reference to the fourth aspect, in some implementations of the fourth aspect, the indication information is period value configuration information of a synchronization signal, and there is an association relationship between a period value of the synchronization signal and the time information of the first signal.

With reference to the fourth aspect, in some implementations of the fourth aspect, the method further includes: The network device sends configuration information, where the configuration information includes an offset value of the part whose signal power is not 0 in the first signal in the time unit, or an offset value of the part whose signal power is 0 in the first signal in the time unit. The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

For beneficial effects of the fourth aspect and the possible designs, refer to the related descriptions of the third aspect. Details are not described herein again.

With reference to the first aspect to the fourth aspect, in some implementations, the modulation scheme of the wake-up signal is on-off keying OOK.

With reference to the first aspect to the fourth aspect, in some implementations, a waveform of the wake-up signal is an orthogonal frequency division multiplexing OFDM waveform.

With reference to the first aspect to the fourth aspect, in some implementations, each OFDM symbol is one time unit, or each OFDM symbol includes at least two time units.

With reference to the first aspect to the fourth aspect, in some implementations, an encoding manner of the wake-up signal is a Manchester encoding manner.

According to a fifth aspect, a communication apparatus is provided. The apparatus is configured to perform the method provided in any one of the first aspect to the fourth aspect. Specifically, the apparatus may include a unit and/or module configured to perform the method provided in any one of the foregoing implementations of any one of the first aspect to the fourth aspect, for example, a processing unit and/or a communication unit.

In an implementation, the apparatus is a communication device (for example, a terminal device or a network device). When the apparatus is a communication device, the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a communication device (for example, a terminal device or a network device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit, and the processing unit may be at least one processor, processing circuit, logic circuit, or the like.

According to a sixth aspect, a communication apparatus is provided. The apparatus includes: a memory, configured to store a program; and at least one processor, configured to execute a computer program or instructions stored in the memory, to perform the method provided in any one of the foregoing implementations of any one of the first aspect to the fourth aspect.

In an implementation, the apparatus is a communication device (for example, a terminal device or a network device).

In another implementation, the apparatus is a chip, a chip system, or a circuit used in a communication device (for example, a terminal device or a network device).

According to a seventh aspect, this application provides a processor, configured to perform the method provided in each of the foregoing aspects.

Unless otherwise specified, or if operations such as sending and obtaining/receiving related to the processor do not conflict with actual functions or internal logic of the processor in related descriptions, the operations may be understood as operations such as outputting and inputting performed by the processor, or may be understood as sending and receiving operations performed by a radio frequency circuit and an antenna. This is not limited in this application.

According to an eighth aspect, a computer-readable storage medium is provided. The computer-readable medium stores program code to be executed by a device, and the program code includes the method provided in any one of the foregoing implementations of any one of the first aspect to the fourth aspect.

According to a ninth aspect, a computer program product including instructions is provided. When the computer program product runs on a computer, the computer is enabled to perform the method provided in any one of the foregoing implementations of any one of the first aspect to the fourth aspect.

According to a tenth aspect, a chip is provided. The chip includes a processor and a communication interface. The processor reads, through the communication interface, instructions stored in a memory, to perform the method provided in any one of the foregoing implementations of any one of the first aspect to the fourth aspect.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing implementations of any one of the first aspect to the fourth aspect.

According to an eleventh aspect, a communication system is provided, including the foregoing terminal device and the foregoing network device.

## BRIEF DESCRIPTION OF DRAWINGS

FIG. 1 is a diagram of a wireless communication system 100 applicable to an embodiment of this application;

FIG. 2 is a diagram of a main circuit and a wake-up circuit;

FIG. 3 is a diagram of a waveform of a signal during OOK modulation;

FIG. 4 is a diagram of a waveform of a signal that passes through a channel;

FIG. 5 is a diagram of a waveform of a signal for which Manchester encoding is used;

FIG. 6 is another diagram of a waveform of a signal for which Manchester encoding is used;

FIG. 7 is a diagram of a noise-free signal and a noisy signal in a high signal-to-noise ratio scenario;

FIG. 8 is a diagram of a noise-free signal and a noisy signal in a low signal-to-noise ratio scenario;

FIG. 9 is a diagram of a communication method 900 according to an embodiment of this application;

FIG. 10 is a diagram of ISI caused by a multi-path delay;

FIG. 11 is a diagram in which a first signal and a second signal each are in one time unit;

FIG. 12 is a diagram of signal-to-noise ratios in various cases;

FIG. 13 is a diagram in which a waveform of a wake-up signal is an ODFM waveform;

FIG. 14 is another diagram in which a waveform of a wake-up signal is an ODFM waveform;

FIG. 15 is a diagram of a communication apparatus 1500 according to an embodiment of this application;

FIG. 16 is a diagram of another communication apparatus 1600 according to an embodiment of this application; and

FIG. 17 is a diagram of a chip system 1700 according to an embodiment of this application.

## DESCRIPTION OF EMBODIMENTS

The following describes technical solutions of embodiments in this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation mobile communication system. The technical solutions provided in this application may be further applied to a device-to-device (device-to-device, D2D) communication system, a vehicle-to-everything (vehicle-to-everything, V2X) communication system, a machine-to-machine (machine-to-machine, M2M) communication system, a machine type communication (machine type communication, MTC), system, an internet of things (internet of things, IoT) communication system, or another communication system.

A terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data to a user, for example, a handheld device or vehicle-mounted device with a wireless connection function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a hand-held device or a computing device that has a wireless communication function or another processing device connected to a wireless modem, a wearable device, a terminal device in a 5G network, and a terminal device in a future evolved public land mobile network (public land mobile network, PLMN). This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-size devices that can implement complete or partial functions without depending on a smartphone, for example, a smart watch or smart glasses, and devices that focus on only one type of application function and need to work with another device like a smartphone, for example, various smart bands or smart accessories for monitoring physical signs.

In embodiments of this application, an apparatus configured to implement a function of the terminal device may be a terminal device, or may be an apparatus that can support the terminal device in implementing the function, for example, a chip system or a chip. The apparatus may be installed in the terminal device. In embodiments of this application, the chip system may include a chip, or may include a chip and another discrete component.

A network device in embodiments of this application may be a device configured to communicate with a terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following various names in a broad sense, or may be replaced with the following names: for example, a NodeB (NodeB), an evolved NodeB (evolved NodeB, eNB), a next generation NodeB (next generation NodeB, gNB), a relay station, an access point, a transmission and reception point (transmission and reception point, TRP), a transmission point (transmission point, TP), a primary station, a secondary station, a multi-standard radio (motor slide retainer, MSR) node, a home base station, a network controller, an access node, a radio node, an access point (AP), a transmission node, a transceiver node, a baseband unit (BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may alternatively be a communication module, a modem, or a chip that is disposed in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a location of the mobile base station. In other examples, the helicopter or the uncrewed aerial vehicle may be configured as a device for communicating with another base station.

In some deployments, the network device mentioned in embodiments of this application may be a device including a CU or a DU, a device including a CU and a DU, or a device including a control plane CU (central unit-control plane (central unit-control plane, CU-CP)) node, a user plane CU (central unit-user plane (central unit-user plane, CU-UP)) node, and a DU node.

The network device and the terminal device may be deployed on the land, including an indoor device, an outdoor device, a hand-held device, or a vehicle-mounted device; may be deployed on the water; or may be deployed on an airplane, a balloon, and a satellite in the air. Scenarios in which the network device and the terminal device are located are not limited in embodiment of this application.

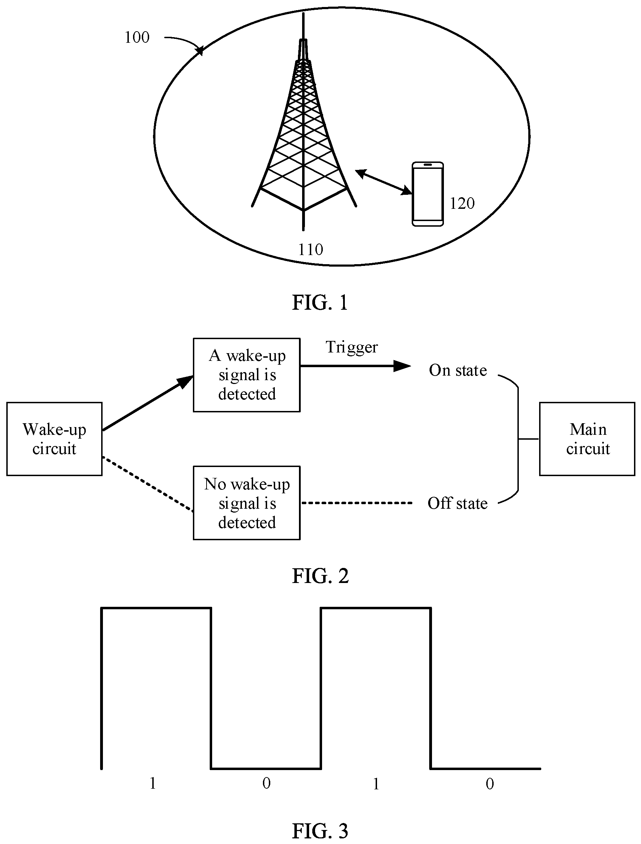

A communication system applicable to an embodiment of this application is first briefly described with reference to FIG. 1. The following is an example.

Refer to FIG. 1. For example, FIG. 1 is a diagram of a wireless communication system 100 applicable to an embodiment of this application. As shown in FIG. 1, the wireless communication system 100 may include at least one network device, for example, a network device 110 shown in FIG. 1. The wireless communication system 100 may further include at least one terminal device, for example, a terminal device 120 shown in FIG. 1. For example, a plurality of antennas may be configured for both the network device and the terminal device, and the network device and the terminal device may communicate with each other by using a multi-antenna technology.

When the network device communicates with the terminal device, the network device may manage one or more cells, and one cell may include at least one terminal device. Optionally, the network device 110 and the terminal device 120 form a single-cell communication system. It is assumed that a cell is denoted as a cell #1. The network device 110 may be a network device in the cell #1, or the network device 110 may serve a terminal device (for example, the terminal device 120) in the cell #1.

It should be noted that the cell may be understood as an area within a coverage area of a wireless signal of the network device.

It should be understood that FIG. 1 is merely a simplified diagram of an example for ease of understanding. The wireless communication system 100 may further include another network device or may further include another terminal device that is not shown in FIG. 1.

For ease of understanding of embodiments of this application, terms in this application are briefly described.

1. A wake-up circuit is also referred to as a wake-up receiver (wake-up receiver, WUR) or a wake-up module, and may be understood as a circuit used by the terminal device in an idle state, or may be understood as a separate low-power small circuit. The low-power small circuit may be implemented by using a separate small circuit or chip with a simple structure, and has low power consumption. A signal received by the terminal device through the wake-up circuit may be referred to as a wake-up signal (wake-up signal/radio, WUS/WUR). It may be understood that the wake-up circuit is merely named for differentiation, and a specific name thereof does not constitute a limitation on the protection scope of this application. For example, without loss of generality, the wake-up circuit may also be described as a first circuit (or a first module).

The signal received by the terminal device through the wake-up circuit may be referred to as being transmitted on a wake-up link. The wake-up link represents a connection relationship between the terminal device and the network device, and is a logical concept rather than a physical entity. It may be understood that the wake-up link is merely named for differentiation, and a specific name thereof does not constitute a limitation on the protection scope of this application. Without loss of generality, in embodiments of this application, the wake-up link is described as a first link. It should be further understood that the wake-up signal is merely an example name, and a name thereof is not limited in this application.

2. A main circuit is also referred to as a main receiver or a main module, and may be understood as a circuit used when the terminal device normally transmits data, or a circuit used when the terminal device transmits data in a connected state. When the terminal device transmits data through the main circuit, power consumption is high. It may be understood that the main circuit is merely named for differentiation, and a specific name thereof does not constitute a limitation on the protection scope of this application. For example, without loss of generality, the main circuit may also be described as a second circuit (or a second module). The main circuit is uniformly used for description below.

A signal received by the terminal device through the main circuit may be referred to as being transmitted on a main link. The main link represents a connection relationship between the terminal device and the network device, and is a logical concept rather than a physical entity. It may be understood that the main link is merely named for differentiation, and a specific name thereof does not constitute a limitation on the protection scope of this application. Without loss of generality, in embodiments of this application, the main link is described as a second link.

In the following, for ease of description, a signal transmitted by the terminal device through the wake-up circuit is denoted as a wake-up signal, and a signal transmitted by the terminal device through the main circuit is denoted as a data signal.

Refer to FIG. 2. For example, FIG. 2 is a diagram of a main circuit and a wake-up circuit.

As shown in FIG. 2, the terminal device may receive (or detect) a wake-up signal through the wake-up circuit, and the terminal device may receive a data signal through the main circuit. It is assumed that the terminal device receives the wake-up signal through the wake-up circuit. If the terminal device detects no wake-up signal, the terminal device continues receiving the wake-up signal through the wake-up circuit, and the main circuit may be in an off state (or a sleep state). If the terminal device detects the wake-up signal, the terminal device triggers wake-up of the main circuit, that is, enables the main circuit to be in/be switched to an on state (or referred to as a working state or an active state). After the main circuit is turned on, the terminal device may transmit the data signal through the main circuit.

3. On-off keying (on-off keying, OOK) modulation is used to modulate information depending on whether a signal is sent, and a corresponding wake-up circuit may receive the signal by using an envelope detection method. In an OOK modulation technology, demodulation can be implemented by a receiver with extremely low complexity, so that an objective of low power consumption of the wake-up circuit can be achieved. To ensure a power consumption gain, the wake-up signal may be modulated by using OOK. It may be understood that another modulation scheme, for example, frequency shift keying (frequency shift keying, FSK) modulation, may alternatively be used for the wake-up signal. This is not limited herein.

When a signal is modulated by using OOK, each bit (namely, an encoded bit) may correspond to one symbol (symbol). Equivalently, a symbol may also be referred to as a chip (chip), or may be referred to as another name. This is not limited herein.

For example, when a bit (bit) is "1", a signal is sent in a symbol length (that is, a signal transmit power in the symbol length is not 0). When the bit is "0", no signal is sent in the symbol length (that is, the signal transmit power in the symbol length is 0). Alternatively, it may be understood that, in OOK modulation, if energy is sent, it indicates that the bit is "1". If no energy is sent, it indicates that the bit is "0".

For another example, when a bit is "0", a signal is sent in a symbol length (that is, a signal transmit power in the symbol length is not 0). When the bit is "1", no signal is sent in the symbol length (that is, the signal transmit power in the symbol length is 0). Alternatively, it may be understood that, in OOK modulation, if energy is sent, it indicates that the bit is "0". If no energy is sent, it indicates that the bit is "1".

For ease of description, the following mainly uses an example in which when a bit is "1", a signal is sent in a symbol length, and when the bit is "0", no signal is sent in the symbol length for description.

In addition, for ease of description, if a signal is sent in a symbol, the signal is denoted as an ON signal; and if no signal is sent in a symbol, the signal is denoted as an OFF signal. For example, when a bit is "1", a signal is sent in a symbol length, and when the bit is "0", no signal is sent in the symbol length. An ON signal indicates that an information bit is "1", and an OFF signal indicates that an information bit is "0".

In addition, an OOK symbol mentioned below indicates a symbol obtained through OOK modulation. The OOK symbol may be, for example, an ON signal or an OFF signal. For example, if the information bit is "1", the OOK symbol obtained through OOK modulation is an ON signal. If the information bit is "0", the OOK symbol obtained through OOK modulation is an OFF signal. The OOK symbol may also be referred to as an OOK signal. For uniformity, the OOK symbol is used for description in the following.

Refer to FIG. 3. For example, FIG. 3 is a diagram of a waveform of a signal during OOK modulation.

In an example, it is assumed that when the bit is "1", a signal is sent in a length of an OOK symbol; or when the bit is "0", no signal is sent in the length of the OOK symbol. Therefore, the waveform shown in FIG. 3 may indicate four bits "0100". To be specific, a 1st bit is an OFF signal, a 2nd bit is an ON signal, and a 3rd bit and a 4th bit are both OFF signals. As shown in FIG. 3, a communication system generally uses a specific frequency (frequency) for sending, and a sent signal needs to be modulated on a carrier. At a receive end, the receive end detects an envelope (or energy) of the received signal, and determines whether an OOK symbol corresponds to the bit "0" or the bit "1", so as to complete demodulation.

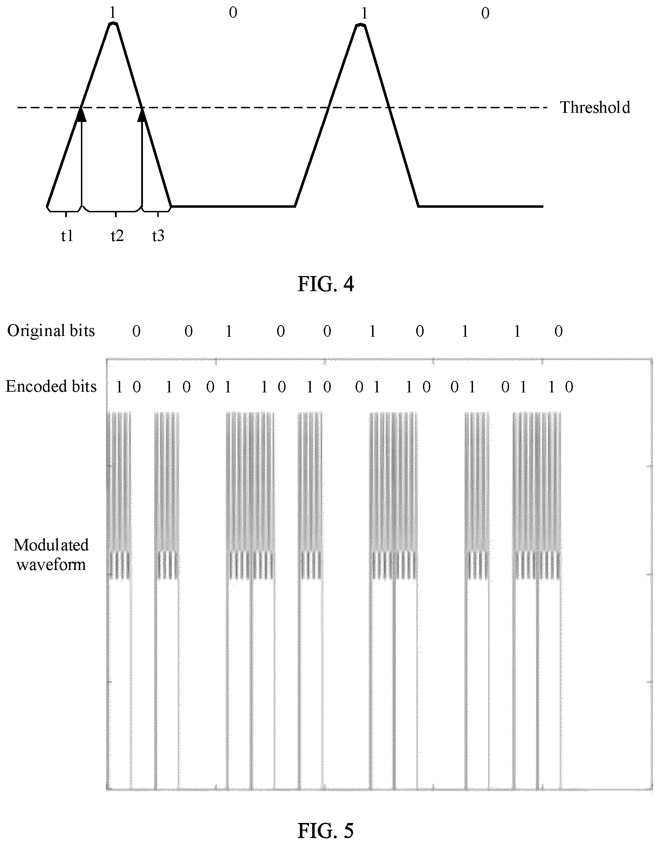

After a signal passes through a channel, distortion may occur due to impact of a channel state and the like. The waveform modulated by using OOK shown in FIG. 3 is used as an example. The waveform shown in FIG. 3 may become a waveform shown in FIG. 4 at the receive end.

Refer to FIG. 4. For example, FIG. 4 is a diagram of a waveform of a signal that passes through a channel. To determine whether the signal corresponds to the bit "0" or the bit "1", a terminal device may compare a level value of the received signal with a threshold (the threshold is shown by a dashed line in FIG. 4). For example, if the level value of the signal received by the terminal device is greater than the threshold, it indicates that the signal corresponds to the bit "1". If the level value of the signal received by the terminal device is less than the threshold, it indicates that the signal corresponds to the bit "0". However, it is difficult to set the threshold. For example, if an inappropriate threshold is selected, a demodulation error may be caused. To resolve this problem, a possible manner is to use Manchester encoding.

4. Manchester encoding is biphase encoding, where the bit "0" or the bit "1" can be indicated through level conversion. For example, through Manchester encoding, the original bit "0" may be encoded as a bit "10", and the original bit "1" may be encoded as a bit "01". For differentiation, bits obtained by encoding the original bits, for example, the bits "10" and "01", may be referred to as encoded bits. When sending a signal, a transmit end may use two OOK symbols to send 1-bit original information. If the original bit "0" is encoded as the bit "10", and the original bit "1" is encoded as the bit "01", the original bit "0" corresponds to one ON signal and then one OFF signal, and the original bit "1" corresponds to one OFF signal and then one ON signal. When demodulating a signal for which Manchester encoding is used, the receive end may compare relative values of signal powers (or signal amplitudes) in two adjacent OOK symbols. If a signal power (or a signal amplitude) in a former OOK symbol is greater than a signal power (or a signal amplitude) in a latter OOK symbol, a received information bit is considered as "0". Otherwise, the received information bit is considered as "1". In this manner, an absolute threshold may not be selected for determining.

It may be understood that the foregoing uses the example in which the original bit "0" is encoded as the bit "10", and the original bit "1" is encoded as the bit "01" for description. This is not limited herein. For example, the original bit "0" is encoded as the bit "01", and the original bit "1" is encoded as the bit "10".

For example, a signal may be generated based on an orthogonal frequency division multiplexing (orthogonal frequency division multiplexing, OFDM) transmitter, or a signal may be modulated through an OFDM transmitter.

In a possible manner, one OOK symbol is transmitted in a length of one OFDM symbol, in other words, one OOK symbol occupies one OFDM symbol. For example, if an ON signal needs to be sent in a length of one OOK symbol, the transmit end may send a specific signal, and make a contour of the signal in the length of the OOK symbol like a square wave as much as possible. If an OFF signal needs to be sent in a length of one OOK symbol, the transmit end may disable a time of the length of the OOK symbol.

Refer to FIG. 5. For example, FIG. 5 is a diagram of a waveform of a signal for which Manchester encoding is used. As shown in FIG. 5, original bits are "0 0 1 0 0 1 0 1 1 0". It is assumed that the original bit "0" is encoded as "10", and the original bit "1" is encoded as "01". In this case, encoded bits for which Manchester encoding is used are "10 10 01 10 10 01 10 01 01 10", and a waveform is shown in FIG. 5. A time length corresponding to each encoded bit may be considered as a length of one OFDM symbol. To be specific, one OOK symbol is transmitted in a length of one OFDM symbol, in other words, one OOK symbol occupies one OFDM symbol. When demodulating the signal, the receive end may compare relative values of signal powers (or signal amplitudes) in two adjacent OOK symbols, and determine demodulated information bits based on a comparison result.

In another possible manner, at least two OOK symbols are transmitted in a length of one OFDM symbol, in other words, at least two OOK symbols occupy one OFDM symbol.

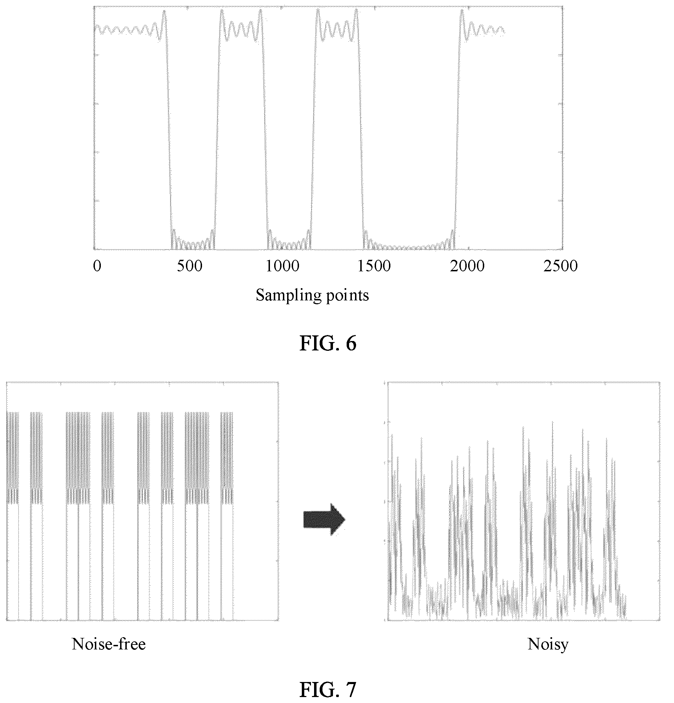

Refer to FIG. 6. For example, FIG. 6 is another diagram of a waveform of a signal for which Manchester encoding is used. As shown in FIG. 6, original bits are "0 0 0 1". It is assumed that the original bit "0" is encoded as "10", and the original bit "1" is encoded as "01". In this case, encoded bits for which Manchester encoding is used are "10 10 10 10 01", and a waveform is shown in FIG. 6. In a length of one OFDM symbol (2192 sampling points in FIG. 6), eight OOK symbols are sent, and are respectively an ON signal, an OFF signal, an ON signal, an OFF signal, an ON signal, an OFF signal, an OFF signal, and an ON signal. When demodulating the signal, the receive end may compare relative values of signal powers (or signal amplitudes) in two adjacent OOK symbols, and determine demodulated information bits based on a comparison result.

It may be understood that, in embodiments of this application, one OOK symbol may be transmitted in a length of one OFDM symbol, or at least two OOK symbols may be transmitted in a length of one OFDM symbol. This is not limited herein. In addition, regardless of whether one OOK symbol or at least two OOK symbols are transmitted in a length of one OFDM symbol, encoding is not limited to the Manchester encoding.

As described above, envelope detection is first performed on a Manchester-encoded OOK symbol during demodulation, and then signal powers (or signal amplitudes) of two adjacent OOK symbols are compared. Through analysis, it can be learned that impact of noise on a signal waveform varies with a signal-to-noise ratio.

Refer to FIG. 7. For example, FIG. 7 is a diagram of a noise-free signal and a noisy signal in a high signal-to-noise ratio scenario. As shown in FIG. 7, after noise is superimposed, whether an OOK symbol is an ON signal or an OFF signal can still be easily differentiated.

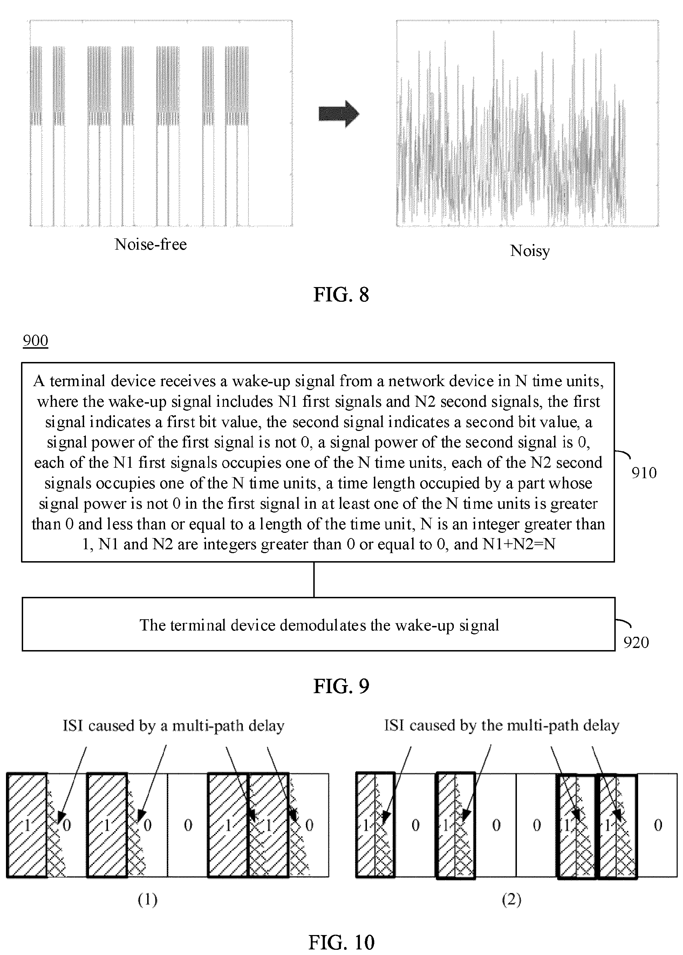

Refer to FIG. 8. For example, FIG. 8 is a diagram of a noise-free signal and a noisy signal in a low signal-to-noise ratio scenario. As shown in FIG. 8, after noise is superimposed, it is difficult to differentiate whether an OOK symbol is an ON signal or an OFF signal.

Based on the foregoing analysis, this application provides a solution, to improve OOK symbol demodulation performance by increasing a signal-to-noise ratio in a target time period. The target time period may be considered as a length of one OOK symbol.

In a possible implementation, a wake-up signal is received in N time units, where a modulation scheme of the wake-up signal is OOK modulation; and the wake-up signal is demodulated based on time information of the wake-up signal in each of the N time units, where a time length occupied by the wake-up signal in at least one of the N time units is less than a length of the time unit. In this way, based on the design, a time length of a part whose power is not 0 in the wake-up signal in one time unit is shortened, to increase an amplitude of the wake-up signal, so that signal energy can be concentrated in a shorter time, and a signal-to-noise ratio in the short time is increased, to improve performance of demodulating the wake-up signal.

It may be understood that the term "and/or" in this specification describes only an association relationship between associated objects and indicate that three relationships may exist. For example, A and/or B may indicate the following three cases: Only A exists, both A and B exist, and only B exists. In addition, the character "/" in this specification generally indicates an "or" relationship between the associated objects.

It may be further understood that, in this application, information indicated by indication information is referred to as to-be-indicated information. In a specific implementation process, the to-be-indicated information is indicated in a plurality of manners, for example, but not limited to, the following manners: The to-be-indicated information is directly indicated, for example, the to-be-indicated information or an index of the to-be-indicated information is indicated. Alternatively, the to-be-indicated information may be indirectly indicated by indicating other information, and there is an association relationship between the other information and the to-be-indicated information. Alternatively, only a part of the to-be-indicated information may be indicated, and another part of the to-be-indicated information is known or pre-agreed on. For example, specific information may alternatively be indicated by using an arrangement sequence of a plurality of pieces of information that are pre-agreed on (for example, stipulated in a protocol), to reduce indication overheads to some extent.

With reference to the accompanying drawings, the following describes in detail a method provided in embodiments of this application. Embodiments provided in this application may be applied to the communication system shown in FIG. 1. This is not limited.

Refer to FIG. 9. For example, FIG. 9 is a diagram of a communication method 900 according to an embodiment of this application. The method 900 may include the following steps.

910: A terminal device receives a wake-up signal from a network device in N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, a time length occupied by a part whose signal power is not 0 in the first signal in at least one of the N time units is greater than 0 and less than or equal to a length of the time unit, N is an integer greater than 1, N1 and N2 are integers greater than 0 or equal to 0, and N1+N2=N.

Correspondingly, the network device sends the wake-up signal in the N time units.

As described above, the wake-up signal indicates a signal received by the terminal device through a wake-up circuit. In other words, all signals received by the terminal device through the wake-up circuit may be referred to as wake-up signals. For example, the wake-up signal is used to wake up at least one terminal device or at least one group of terminal devices.

A time unit may be one symbol (symbol) or several symbols, one or more mini-slots (mini-slots), one or more slots (slots), one or more subframes (subframes), one or more milliseconds, or the like. The time unit may also be referred to as a time domain unit. It may be understood that the foregoing enumerated time unit sizes are merely intended to facilitate understanding of the solutions of this application, and do not limit the protection scope of embodiments of this application.

The first signal indicates the first bit value, the second signal indicates the second bit value, the signal power of the first signal is not 0, and the signal power of the second signal is 0. Based on this, it can be learned that a modulation scheme of the wake-up signal is OOK modulation. If the signal power of the first signal is not 0, it indicates that a signal amplitude of the first signal is not 0, that is, a signal is sent in a time unit (for example, one OOK symbol). If the signal power of the second signal is 0, it indicates that a signal amplitude of the second signal is 0, that is, no signal is sent in a time unit (for example, one OOK symbol). The first signal may also be referred to as an ON signal, and the second signal may also be referred to as an OFF signal. For the ON signal and the OFF signal, refer to the descriptions in the foregoing term explanation part. Details are not described herein again. In an example, the first bit value is "1", and the second bit value is "0". In another example, the first bit value is "0", and the second bit value is "1".

The example shown in FIG. 3 is used as an example. The wake-up signal includes two first signals and two second signals. Signals in a 1st time unit and a 3rd time unit are first signals, and the first bit value indicated by the first signal is "1". Signals in a 2nd time unit and a 4th time unit are second signals, and the second bit value indicated by the second signal is "0".

Each of the N1 first signals occupies one of the N time units, and each of the N2 second signals occupies one of the N time units. Based on this, it can be learned that a time length of one second signal is a length of one time unit, and a time length of one first signal is the length of one time unit. In other words, one first signal or one second signal is transmitted in each of the N time units. The signal power of the first signal of the second signal is not 0. Therefore, the first signal includes a part whose power is not 0. Optionally, the first signal further includes a part whose power is 0.

It may be understood that in this embodiment of this application, an example in which the time length of one first signal is the length of one time unit is mainly used for description. This is not limited herein. For example, the time length of the first signal may alternatively be defined as a time length occupied by the part whose power is not 0 in one time unit. For example, when the time length of the first signal is defined as the time length occupied by the part whose power is not 0 in one time unit, if the time length occupied by the part whose power is not 0 in the time unit is less than a length of the time unit, one first signal and one signal whose power is 0 may be sent in the time unit. In other words, the network device may send one first signal in a part of a time period in the time unit, and may not send a signal in a remaining time period in the time unit. If the time length occupied by the part whose power is not 0 in the time unit is equal to the length of the time unit, one first signal may be sent in the time unit. In other words, the network device may send one first signal in the time unit.

In addition, if the time length of the first signal is defined as the time length occupied by the part whose power is not 0 in one time unit, the length of the second signal may be equal to the length of one time unit, that is, no signal is sent in the time unit. Alternatively, the length of the second signal may be greater than or equal to the length of one time unit. For example, when Manchester encoding is used, the length of the second signal may be greater than or equal to the length of one time unit. Specifically, when Manchester encoding is used, regardless of whether an original bit is "0" or "1", one first signal and one second signal are generally sent (the two signals represent different meanings based on different orders of the two signals). In this case, if the length of the first signal is the time length occupied by the part whose power is not 0 in one time unit, in an example, the length of the second signal may be a total length of the part whose power is 0 in the time unit and another time unit.

For ease of description, the following uses an example in which the time length of one first signal is the length of one time unit for description.

The time length occupied by the part whose signal power is not 0 in the first signal in at least one of the N time units is greater than 0 and is less than or equal to the length of the time unit. Based on this, it can be learned that the first signal may include the part whose power is 0 and the part whose power is not 0.

In a first possible implementation, the time length occupied by the part whose signal power is not 0 in the first signal in at least one of the N time units is greater than 0 and less than the length of the time unit. In this implementation, the first signal includes the part whose power is 0 and the part whose power is not 0, and the time length occupied by the part whose power is not 0 in the first signal is greater than 0 and less than the length of the time unit. Correspondingly, a time length occupied by the part whose power is 0 in the first signal is greater than 0 and less than the length of the time unit. A sum of the time length occupied by the part whose power is 0 and the time length occupied by the part whose power is not 0 in the first signal is equal to the length of the time unit.

According to this implementation, based on the design, the time length of the part whose power is not 0 in the first signal in one time unit is shortened, to increase a signal amplitude, so that signal energy can be concentrated in a shorter time, and a signal-to-noise ratio in the short time is increased, to improve performance of demodulating the wake-up signal. In addition, the time length of the part whose power is not 0 in the first signal in one time unit is reduced, so that inter-symbol interference (inter-symbol interference, ISI) caused by a large multi-path delay can be resisted.

Refer to FIG. 10. For example, FIG. 10 is a diagram of ISI caused by a multi-path delay.

When a channel has a large multi-path delay, a time span of a signal received by a receive end is longer than a time span of a signal sent by a transmit end. As shown in (1) in FIG. 10, a tail of the first signal may fall within a next time unit, thereby affecting signal demodulation. When the time length occupied by the part whose power is not 0 in the first signal is greater than 0 and less than the length of the time unit, as shown in (2) in FIG. 10, because the time length of the part whose power is not 0 in the first signal in one time unit is shortened, a tail of the part whose power is not 0 in the first signal may fall within the same time unit, and a signal in a next time unit is not affected. In other words, that the time length of the part whose power is not 0 in the first signal in one time unit is less than the length of the time unit may be equivalent to that a guard interval is added to time domain. Therefore, ISI caused by a channel multi-path effect can be reduced or even eliminated.

In a second possible implementation, the time length occupied by the part whose signal power is not 0 in the first signal in at least one of the N time units is greater than 0 and equal to the length of the time unit. In this implementation, the first signal includes only the part whose power is not 0. In other words, the time length occupied by the part whose power is not 0 in the first signal is equal to the length of the time unit, and the time length occupied by the part whose power is 0 in the first signal is equal to 0.

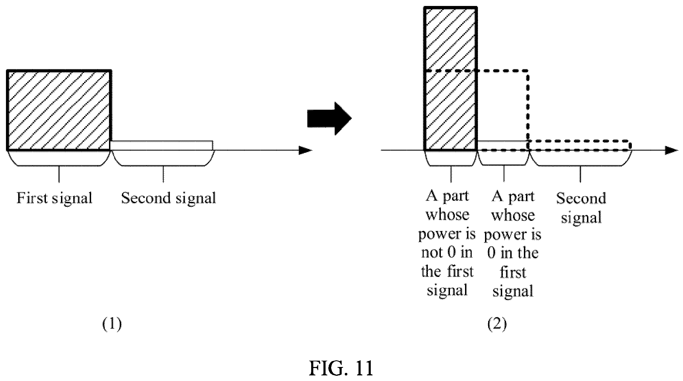

Refer to FIG. 11. For example, FIG. 11 is a diagram in which the first signal and the second signal each are in one time unit. As shown in FIG. 11, the wake-up signal includes one first signal and one second signal, the first signal occupies one of two time units, and the second signal occupies one of the two time units. As shown in (1) in FIG. 11, the first signal includes only the part whose power is not 0, and the time length occupied by the part whose power is not 0 in the first signal is equal to the length of the time unit. As shown in (2) in FIG. 11, the first signal includes the part whose power is 0 and the part whose power is not 0, and the time length occupied by the part whose power is not 0 in the first signal is greater than 0 and less than the length of the time unit.

920: The terminal device demodulates the wake-up signal.

Optionally, the terminal device demodulates the wake-up signal based on time information of the first signal.

The time information of the first signal is used to determine the time length occupied by the part whose power is not 0 in the first signal in one time unit. The terminal device may demodulate the wake-up signal based on the time length occupied by the part whose power is not 0 in the first signal in one time unit.

For example, if the terminal device knows the time length occupied by the part whose power is not 0 in the first signal in one time unit, the terminal device may select a time interval corresponding to demodulation. If the terminal device does not know the time length occupied by the part whose power is not 0 in the first signal in one time unit, the terminal device performs demodulation in the entire time unit, and more noise energy is introduced.

It is assumed that a signal is s(t), and a noise is n(t). For example, Manchester encoding is used, and the receive end compares signal energy in two time units to perform demodulation.

Case 1: The terminal device knows the time length occupied by the part whose power is not 0 in the first signal in one time unit.

(1) Energy of a signal interval is:

$$E\left[\int_0^{\alpha T}\left(s(t)+n(t)\right)^2\right]=\int_0^{\alpha T}E\left[\left(s(t)+n(t)\right)^2\right]=\int_0^{\alpha T}E\left[\left(s(t)\right)^2\right]+E\left[\left(n(t)\right)^2\right]=\alpha T(S+N)$$

$$=E_S+\alpha TN$$

(2) Energy of a noise interval is:

$$\left[\int_T^{T+\alpha T}\left(n(t)\right)^2\right]=\alpha TN$$

(3) A signal-to-noise ratio is $\dfrac{E_S}{2\alpha TN}$.

Herein, $\alpha$ indicates a ratio of the time length occupied by the part whose signal power is not 0 in the first signal to the length of the time unit, and may be referred to as a duty cycle. A value of $\alpha$ is [0, 1]. indicates total signal energy of the part whose power is not 0. Es indicates an average signal power of the part whose power is not 0. N indicates an average noise power. T indicates the length of the time unit. It can be learned that when the terminal device knows the time length occupied by the part whose power is not 0 in the first signal in one time unit, the terminal device may process only the part whose power is not 0 (whose length is $\alpha$T). For brevity, description of same or similar cases is omitted below.

Case 2: The terminal device does not know the time length occupied by the part whose power is not 0 in the first signal in one time unit.

(1) Energy of a signal interval is:

$$\left[\int_0^T\left(s(t)+n(t)\right)^2\right]=E_S+TN$$

(2) Energy of a noise interval is:

$$E\left[\int_{T}^{2T} \left(n(t)\right)^2\right] = TN$$

(3) A signal-to-noise ratio is $\dfrac{E_S}{2TN}$ .

It can be learned that when the terminal device knows the time length occupied by the part whose power is not 0 in the first signal in one time unit, the terminal device needs to process all signals (whose length is T) in one time unit, and a signal-to-noise ratio is higher.

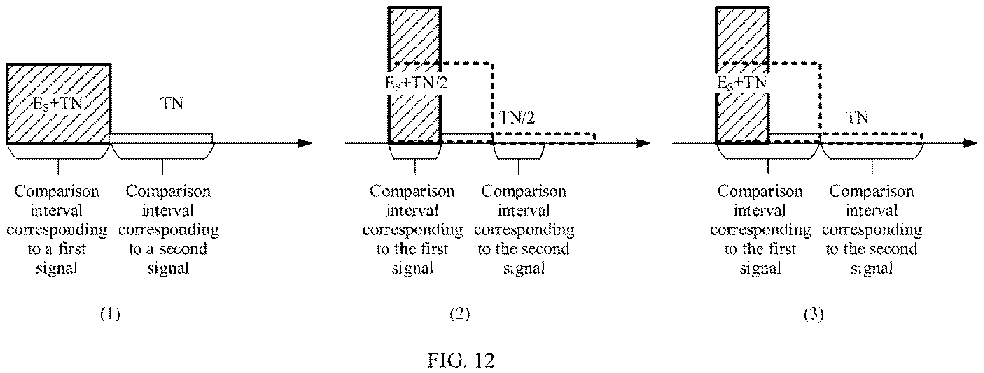

Refer to FIG. 12. For example, FIG. 12 is a diagram of signal-to-noise ratios in various cases.

(1) in FIG. 12 shows a case in which the time length occupied by the part whose power is not 0 in the first signal in one time unit is the length of the time unit, namely, a case in which $\alpha$=1. (2) in FIG. 12 shows a case in which the time length occupied by the part whose power is not 0 in the first signal in one time unit is less than the length of the time unit, and the terminal device knows the time length occupied by the part whose power is not 0 in the first signal in one time unit, namely, a case in which $\alpha$ is less than 1, and the terminal device knows the value of $\alpha$. In this example, $\alpha$=0.5. (3) in FIG. 12 shows a case in which the time length occupied by the part whose power is not 0 in the first signal in one time unit is less than the length of the time unit, and the terminal device does not know the time length occupied by the part whose power is not 0 in the first signal in one time unit, namely, a case in which $\alpha$ is less than 1, and the terminal device does not know the value of $\alpha$. In this example, $\alpha$=0.5. It can be learned from the figure that, in (1) in FIG. 12, the time length occupied by the part whose power is not 0 in the first signal in one time unit is equal to the length of the time unit. Therefore, the terminal device demodulates the entire time unit. In this case, a signal-to-noise ratio is lower than a signal-to-noise ratio in the case shown in (2) in FIG. 12. In (3) in FIG. 12, although the time length occupied by the part whose power is not 0 in the first signal in one time unit is less than the length of the time unit, because the terminal device does not know the time length occupied by the part whose power is not 0 in the first signal in one time unit, the terminal device still demodulates the entire time unit. In this case, a signal-to-noise ratio is lower than the signal-to-noise ratio in the case shown in (2) in FIG. 12. It can be learned from that the signal-to-noise ratio in the case shown in (2) in FIG. 12 is the highest.

Optionally, the time information of the first signal includes at least one of the following: the ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

Example 1: The time information of the first signal is the ratio of the time length occupied by the part whose signal power is not 0 in the first signal to the length of the time unit. Based on this, the terminal device may determine, based on the length of the time unit and the ratio of the time length occupied by the part whose signal power is not 0 in the first signal to the length of the time unit, the time length occupied by the part whose signal power is not 0 in the first signal in one time unit.

For brevity, in this embodiment of this application, the ratio of the time length occupied by the part whose signal power is not 0 in the first signal to the length of the time unit is denoted as a duty cycle, and the duty cycle is greater than 0 and less than 1 or equal to 1. Manchester encoding is used as an example for description, and it is assumed that every two OFDM symbols are used to transmit 1-bit information. If a length of the OFDM symbol is L (a specific length may be determined based on a subcarrier spacing), and the duty cycle is $\alpha$, the time length occupied by the part whose power is not 0 in the first signal is $\alpha \cdot L$, the time length occupied by the part whose power is 0 in the first signal is $(1-\alpha) \cdot L$, and the time length occupied by the second signal is L. Alternatively, if the time length of the first signal is defined as the time length occupied by the part whose power is not 0 in one time unit, descriptions may be as follows: The length of the first signal is $\alpha \cdot L$, and the length of the second signal is $(2-\alpha) \cdot L$.

Optionally, a ratio of a time length occupied by a part whose signal power is not 0 in each of the N1 first signals to the length of the time unit is the same. In other words, duty cycles of time units corresponding to the first signals are the same.

Example 2: The time information of the first signal is the time length occupied by the part whose signal power is not 0 in the first signal. Based on this, the terminal device may directly determine the time length occupied by the part whose signal power is not 0 in the first signal in one time unit.

Example 3: The time information of the first signal is the ratio of the time length occupied by the part whose signal power is 0 in the first signal to the length of the time unit. Based on this, the terminal device may determine, based on the length of the time unit and the ratio of the time length occupied by the part whose signal power is 0 in the first signal to the length of the time unit, the time length occupied by the part whose signal power is 0 in the first signal in one time unit. The sum of the time length occupied by the part whose signal power is 0 in the first signal in one time unit and the time length occupied by the part whose signal power is not 0 in the first signal in one time unit is the length of the time unit. Therefore, the time length occupied by the part whose signal power is not 0 in the first signal in one time unit may be determined based on the time length occupied by the part whose signal power is 0 in the first signal in one time unit.

For example, the ratio of the time length occupied by the part whose signal power is 0 in the first signal to the length of the time unit is indicated by $\beta$, where $\beta$ is greater than 0 or equal to 0, and $\beta$ is less than 1 or equal to 1. Manchester encoding is used as an example for description, and it is assumed that every two OFDM symbols are used to transmit 1-bit information. If a length of the OFDM symbol is L (a specific length may be determined based on a subcarrier spacing), the time length occupied by the part whose power is 0 in the first signal is $\beta \cdot L$, the time length occupied by the part whose power is not 0 in the first signal is $(1-\beta) \cdot L$, and the time length occupied by the second signal is L. Alternatively, if the time length of the first signal is defined as the time length occupied by the part whose power is not 0 in one time unit, descriptions may be as follows: The length of the first signal is $(1-\beta) \cdot L$, and the length of the second signal is $(1+\beta) \cdot L$. Optionally, a ratio of a time length occupied by a part whose signal power is 0 in each of the N1 first signals to the length of the time unit is the same.

Example 4: The time information of the first signal is the time length occupied by the part whose signal power is 0 in the first signal. Based on this, the terminal device may directly determine the time length occupied by the part whose signal power is 0 in the first signal in one time unit. The sum of the time length occupied by the part whose signal power is 0 in the first signal in one time unit and the time length occupied by the part whose signal power is not 0 in the first signal in one time unit is the length of the time unit. Therefore, the time length occupied by the part whose signal power is not 0 in the first signal in one time unit may be determined based on the time length occupied by the part whose signal power is 0 in the first signal in one time unit.

The foregoing separately describes each piece of information with reference to Example 1 to Example 4. This is not limited herein. For example, the foregoing pieces of information may alternatively be used in combination. For example, the following enumerates two examples.

Example 5: The time information of the first signal includes the ratio of the time length occupied by the part whose signal power is not 0 in the first signal to the length of the time unit, and the ratio of the time length occupied by the part whose signal power is 0 in the first signal to the length of the time unit. Based on this, the terminal device may determine, based on the ratio of the time length occupied by the part whose signal power is not 0 in the first signal to the length of the time unit, the time length occupied by the part whose signal power is not 0 in the first signal in one time unit, and may further determine, based on the ratio of the time length occupied by the part whose signal power is 0 in the first signal to the length of the time unit, the time length occupied by the part whose signal power is 0 in the first signal in one time unit.

Example 6: The time information of the first signal includes the time length occupied by the part whose signal power is not 0 in the first signal and the time length occupied by the part whose signal power is 0 in the first signal. Based on this, the terminal device may directly determine the time length occupied by the part whose signal power is not 0 in the first signal in one time unit and the time length occupied by the part whose signal power is 0 in the first signal in one time unit.

It may be understood that Example 5 and Example 6 are examples for description of combined use of various pieces of information. This is not limited herein. For example, the time information of the first signal includes at least two of the following: the ratio of the time length occupied by the part whose signal power is not 0 in the first signal to the length of the time unit, the time length occupied by the part whose signal power is not 0 in the first signal, the ratio of the time length occupied by the part whose signal power is 0 in the first signal to the length of the time unit, and the time length occupied by the part whose signal power is 0 in the first signal. In other words, all the foregoing pieces of information may be used in combination.

It may be further understood that the foregoing several examples are examples for description, and any information that can be used to determine the time length occupied by the part whose power is not 0 in the first signal in one time unit is applicable to embodiments of this application.

In this embodiment of this application, the network device may determine the time information of the first signal, and then notify the terminal device of the time information. For example, the network device may configure a duty cycle, and send the configured duty cycle to the terminal device, so that the terminal device may learn, based on the duty cycle, the time length occupied by the part whose power is not 0 in the first signal in one time unit.

Optionally, the method 900 further includes: The network device sends indication information, where the indication information indicates the time information of the first signal. Correspondingly, the terminal device receives the indication information from the network device. Based on this, the terminal device may determine the time information of the first signal based on the indication of the network device.

For example, the indication information may be carried in radio resource control (radio resource control, RRC) signaling. For example, the indication information may be configured by using a system information block (system information block, SIB).

In a possible implementation, the indication information is an explicit indication, that is, the indication information directly indicates the time information of the first signal. Based on this manner, the terminal device may directly determine the time information of the first signal based on the indication information.

In another possible implementation, the indication information is an implicit indication, that is, the indication information may indicate other information (for example, denoted as information #A). Based on this manner, the terminal device may indirectly determine the time information of the first signal based on the indication information. For example, the terminal device may directly determine the information #A based on the indication information, and determine the time information of the first signal based on the information #A.

For example, there is an association relationship between the time information of the first signal and the information #A, and the terminal device may determine the time information of the first signal based on the information #A and the association relationship.

In an example, the information #A is a period value of a synchronization signal. Based on this, there is an association relationship between the time information of the first signal and the period value of the synchronization signal, and the terminal device may determine the time information of the first signal based on the period value of the synchronization signal and the association relationship. For example, the network device sends the indication information to the terminal device, where the indication information indicates the period value of the synchronization signal, or the indication information is the period value of the synchronization signal. The terminal device may determine the period value of the synchronization signal based on the indication information, and the terminal device may determine the time information of the first signal based on the period value of the synchronization signal and the association relationship between the time information of the first signal and the period value of the synchronization signal.

Optionally, a network side or a protocol may predefine (or support) at least two types of time lengths occupied by the part whose signal power is not 0 in the first signal. For ease of description, the following uses an example in which the time information of the first signal is a duty cycle for description. The network side or the protocol may predefine (or support) at least two duty cycles. During actual transmission, the network device may select an appropriate duty cycle, and notify the terminal device of the appropriate duty cycle.

For example, a shorter length of the first signal indicates more concentrated energy, a higher equivalent signal-to-noise ratio, and better theoretical demodulation performance. However, a shorter length of the first signal indicates more sensitivity to a residual time offset. Therefore, a balance between "energy concentration" and "anti-time offset" needs to be considered. A value of the time offset depends on clock precision of a WUR, and also depends on an interval (namely, the period value) of the synchronization signal. Therefore, if the network side or the protocol may predefine (or support) different duty cycles, the network device may flexibly select the duty cycle and the period value of the synchronization signal, to balance overheads of the synchronization signal and coverage performance of the wake-up signal. In addition, different duty cycles are applicable to different network deployment scenarios, that is, the network device may select an appropriate duty cycle based on an actual communication status.

It may be understood that if the network side or the protocol predefines (or supports) a time length occupied by the part whose signal power is not 0 in the first signal, the network device does not need to perform configuration again. For example, the terminal device may learn in advance of the time length occupied by the part whose signal power is not 0 in the first signal.

Optionally, the method 900 further includes: The network device sends configuration information, where the configuration information includes an offset value of the part whose signal power is not 0 in the first signal in the time unit, or an offset value of the part whose signal power is 0 in the first signal in the time unit. Correspondingly, the terminal device receives the configuration information from the network device.

Based on this, the network device may configure the offset value of the part whose power is not 0 in the first signal relative to the time unit, or configure the offset value of the part whose power is 0 in the first signal relative to the time unit. In this way, the terminal device can learn, based on the offset value, a location of the part whose power is not 0 in the first signal in the time unit, to determine the time interval corresponding to demodulation, and increase a signal-to-noise ratio of a signal in the time interval corresponding to demodulation, so as to improve demodulation performance.

The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit. An example shown in FIG. 11 is used. In (2) in FIG. 11, the time length occupied by the part whose power is not 0 in the first signal is greater than 0 and is less than the length of the time unit, and the offset value between the start location of the part whose signal power is not 0 in the first signal and the start location of the time unit is 0.

The offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit. An example shown in FIG. 11 is used. In (2) in FIG. 11, the time length occupied by the part whose power is 0 in the first signal is greater than 0 and is less than the length of the time unit, and the offset value between the end location of the part whose signal power is 0 in the first signal and the end location of the time unit is 0.

It may be understood that the foregoing descriptions of indicating, by the network device, the offset value to the terminal device is used as an example. This is not limited herein. For example, the offset value may alternatively be predefined. For example, the offset value is predefined in a standard.

In embodiments of this application, how the network device generates the first signal is not limited. The duty cycle is used as an example. When the network device generates first signals with different duty cycles, and a waveform of the wake-up signal is an OFDM waveform, in a possible implementation, an ideal square wave signal is first generated, and then an OFDM signal most similar to the ideal square wave signal is obtained based on a least square principle.

For example, if the network device expects to generate a first signal whose duty cycle is 0.4, the network device may first generate an ideal square wave $\mathbf{b_m} = [1, 1, 0, 0, 0]^T$, then obtain a frequency domain signal sequence through calculation, map the frequency domain signal sequence to a corresponding subcarrier, and then perform inverse fast Fourier transform (inverse fast Fourier transform, IFFT), to generate the first signal with the target duty cycle. For example, the frequency domain signal sequence may be calculated in the following formula:

$$\tilde{\mathbf{x}}_{LS} = \underset{\tilde{\mathbf{x}}}{\mathrm{argmax}} \left\| \tilde{\mathbf{F}}\tilde{\mathbf{x}} - \mathbf{b}_{target} \right\|^2 = \left(\tilde{\mathbf{F}}^H \tilde{\mathbf{F}}\right)^{-1} \tilde{\mathbf{F}}^H \mathbf{b}_{target}$$

Herein, the argmax function indicates to make a formula following argmax obtain a maximum value. $\tilde{x}_{LS}$ indicates a frequency domain signal sequence obtained through solving. $\mathbf{F}$ indicates an $N_{IFFT} \times K$ matrix obtained by intercepting an IFFT matrix. K is a length of the frequency domain signal sequence. $\mathbf{b}_{target}$ indicates an ideal signal, namely, $\mathbf{b_m}$. The superscript H indicates conjugate transposition. For example, $\mathbf{A}^H$ indicates conjugate transposition of a matrix (or vector) $\mathbf{A}$.

Optionally, the network device may further configure an offset value of the start location of the part whose power is not 0 in the first signal relative to a time unit boundary. For example, if it is expected to generate a first signal whose duty cycle is $\alpha$=0.4, and an offset value between a start location of a part whose signal power is not 0 in the first signal and the start location of the time unit is 0.2, an ideal square wave $\mathbf{b_m}$=[0, 1, 1, 0, 0]$^T$ may be first generated, and then the first signal is generated according to the foregoing procedure.

Optionally, Manchester encoding may be used for encoding of the wake-up signal, or Manchester encoding may not be used. This is not limited. Descriptions are separately provided below.

Case 1: Manchester encoding is not used for encoding of the wake-up signal.

For example, OOK modulation is performed on a signal, and one OOK symbol may carry 1-bit information. The network device shortens a length of the part whose power is not 0 in the first signal. In other words, the part whose power is not 0 in the first signal occupies a part of a time of one OOK symbol. When receiving the wake-up signal, the terminal device may select a part of a time period of each OOK symbol, and compare received energy with a threshold, to determine whether the received signal is the first signal or the second signal, so as to complete demodulation.

The example shown in FIG. 10 is used. As shown in FIG. 10, eight OOK symbols may carry 8-bit information, and the 8-bit information is, for example, 10100110. (1) in FIG. 10 is a diagram in which the length of the part whose power is not 0 in the first signal is not shortened, that is, the part whose power is not 0 in the first signal occupies one OOK symbol. (2) in FIG. 10 is a diagram in which the length of the part whose power is not 0 in the first signal is shortened, that is, the part whose power is not 0 in the first signal occupies a part of a time of one OOK symbol. As shown in (2) in FIG. 10, in a possible implementation, the length of the part whose power is not 0 in the first signal may be shortened by half, that is, the part whose power is not 0 in the first signal occupies a first half of a time of one OOK symbol. When receiving a signal, the terminal device may select a first half of a time of each OOK symbol, and compare received energy with a threshold, to determine whether the received signal is the first signal or the second signal, so as to complete demodulation. It may be understood that, that the part whose power is not 0 in the first signal occupies the first half of the time of one OOK symbol is merely an example for description, and this is not limited. As described above, the duty cycle is greater than 0 and less than 1 or equal to 1.

In addition, it can be learned by comparing (1) and (2) in FIG. 10 that after the length of the part whose power is not 0 in the first signal is shortened, the tail of the part whose power is not 0 in the first signal may fall within the same OOK symbol, and a signal in a next OOK symbol is not affected.

Case 2: Manchester encoding is used for encoding of the wake-up signal.

The example in which OOK modulation is performed on a signal is still used. For example, two OOK symbols may carry 1-bit original information. The example shown in FIG. 10 is still used. As shown in FIG. 10, eight OOK symbols may carry 4-bit original information. It is assumed that an original bit "0" is encoded as "10", and an original bit "1" is encoded as "01", the 4-bit original information is, for example, 0010. For other related descriptions, refer to Case 1. Details are not described herein again.

It may be understood that, the foregoing is an example for description, and this is not limited. For example, an encoding manner of the wake-up signal may alternatively be Manchester encoding.

Optionally, the waveform of the wake-up signal is the OFDM waveform.

For example, a general principle of OFDM is as follows: General operations at the transmit end may include at least: performing modulation (modulation) on an original bit, performing subcarrier mapping (subcarrier mapping), performing IFFT, and adding a cyclic prefix (cyclic prefix, CP). General operations at the receive end may include at least: performing CP removal and FFT, then performing channel estimation and frequency domain equalization (frequency domain equalization, FDE), performing subcarrier de-mapping (subcarrier de-mapping), and then performing demodulation to obtain the original bit. When the OFDM waveform is used for OOK modulation, for operations at the transmit end, refer to the foregoing descriptions. Operations at the receive end may include: CP removal, envelope detection, and then performing demodulation to obtain an original bit. It may be understood that the description of the OFDM herein is merely an example description for ease of understanding, and does not limit the protection scope of this application.

In a possible case, one OFDM symbol may correspond to one time unit. For example, one OFDM symbol corresponds to one OOK symbol.

For a manner in which the network device generates the first signal with the specific duty cycle, refer to the foregoing descriptions. Details are not described herein again.

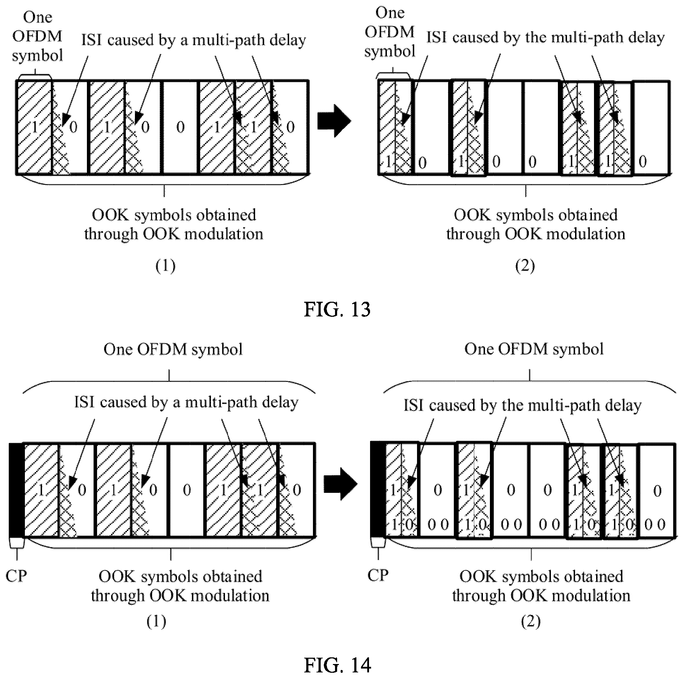

Refer to FIG. 13. For example, FIG. 13 is a diagram in which a waveform of a wake-up signal is an ODFM waveform.

As shown in FIG. 13, after the wake-up signal is modulated by using OOK, eight OOK symbols are obtained. One OOK symbol is transmitted in a length of one OFDM symbol, or one OOK symbol occupies one OFDM symbol. As shown in FIG. 13, the transmit end (for example, the network device) sends eight OFDM symbols, and the eight OFDM symbols correspond to eight OOK symbols. In addition, it can be learned by comparing (1) and (2) in FIG. 13 that after the length of the part whose power is not 0 in the first signal is shortened, the tail of the part whose power is not 0 in the first signal may fall within the same ODFM symbol, and a signal in a next ODFM symbol is not affected. It may be understood that each OFDM symbol includes a CP, and the CP may be located at a start location of each OFDM symbol. For brevity, this is not shown in FIG. 13.

In another possible case, one OFDM symbol corresponds to at least two time units. For example, one OFDM symbol corresponds to at least two OOK symbols. For a manner in which the network device generates the first signal with the specific duty cycle, refer to the foregoing descriptions. Details are not described herein again. For example, when one OFDM symbol corresponds to eight OOK symbols, and the duty cycle is $\alpha=1$, an ideal waveform $\mathbf{b}_m=[1, 0, 1, 0, 0, 1, 1, 0]^T$ may be first generated, and then a to-be-sent signal is obtained based on the least square principle. For another example, when the duty cycle is $\alpha=0.5$, an ideal waveform may be set to $\mathbf{b}_m = [1, 0, 0, 0, 1, 0, 0, 0, 0, 0, 1, 0, 1, 0, 0, 0]^T$, and then a to-be-sent signal is obtained based on the least square principle.

Refer to FIG. 14. For example, FIG. 14 is another diagram in which a waveform of a wake-up signal is an ODFM waveform.

As shown in FIG. 14, after the wake-up signal is modulated by using OOK, eight OOK symbols are obtained. Eight OOK symbols are transmitted in a length of one OFDM symbol, or eight OOK symbols occupy one OFDM symbol. As shown in FIG. 14, the transmit end (for example, the network device) sends one OFDM symbol, and the one OFDM symbol corresponds to eight OOK symbols. In addition, it can be learned by comparing (1) and (2) in FIG. 14 that after the length of the part whose power is not 0 in the first signal is shortened, the tail of the part whose power is not 0 in the first signal may fall within the same OOK symbol, and a signal in a next OOK symbol is not affected.

It may be understood that, in some of the foregoing embodiments, "transmission" is mentioned. Unless otherwise specified, transmission includes receiving and/or sending. For example, transmitting a signal may include receiving the signal and/or sending the signal.

It may be further understood that, in embodiments of this application, "receiving" may alternatively be replaced with "detecting" or "monitoring". For example, "receiving a wake-up signal" may alternatively be replaced with "detecting a wake-up signal" or "monitoring a wake-up signal".

It may be further understood that in embodiments of this application, interaction between the terminal device and the network device is mainly used as an example for description. This application is not limited thereto. The terminal device may be replaced with a receive end device, and the receive end device may be a terminal device or a network device. The network device may be replaced with a transmit end device, and the transmit end device may be a terminal device or a network device. For example, the "terminal device" may be replaced with a "first terminal device", and the "network device" may be replaced with a "second terminal device".

It should be further understood that the formulas used in embodiments of this application are merely examples for description, and do not constitute a limitation on the protection scope of embodiments of this application. In a process in which the foregoing parameters are calculated, calculation may be performed according to the foregoing formulas, calculation may be performed based on variations of the foregoing formulas, or calculation may be performed in another manner, to satisfy calculation results of the formulas.

It may be further understood that some optional features in embodiments of this application may not depend on another feature in some scenarios, or may be combined with another feature in some scenarios. This is not limited.

It may be further understood that the solutions in embodiments of this application may be appropriately combined for use, and explanations or descriptions of terms in embodiments may be mutually referenced or explained in the embodiments. This is not limited.

It may be further understood that in the method embodiments, the method and the operations implemented by the terminal device may be implemented by a component (for example, a chip or a circuit) of the terminal device. In addition, the method and the operations implemented by the network device may be implemented by a component (for example, a chip or a circuit) of the network device. This is not limited.

Corresponding to the methods provided in the method embodiments, an embodiment of this application further provides a corresponding apparatus. The apparatus includes a corresponding module configured to perform the method embodiments. The module may be software, hardware, or a combination of software and hardware. It may be understood that the technical features described in the method embodiments are also applicable to the following apparatus embodiments.

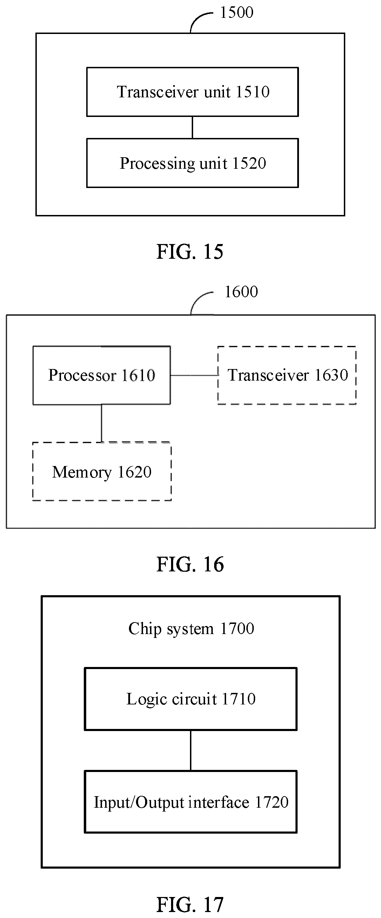

Refer to FIG. 15. For example, FIG. 15 is a diagram of a communication apparatus 1500 according to an embodiment of this application. The apparatus 1500 includes a transceiver unit 1510 and a processing unit 1520. The transceiver unit 1510 may be configured to implement a corresponding communication function. The transceiver unit 1510 may alternatively be referred to as a communication interface or a communication unit. The processing unit 1520 may be configured to perform data or information processing.

Optionally, the apparatus 1500 further includes a storage unit. The storage unit may be configured to store instructions and/or data. The processing unit 1520 may read the instructions and/or data in the storage unit, to enable the apparatus to implement the foregoing method embodiments.

In a possible design, the apparatus 1500 may be configured to perform an action performed by the terminal device in the foregoing method embodiments. In this case, the apparatus 1500 may be the terminal device or a component of the terminal device. The transceiver unit 1510 is configured to perform a receiving and sending-related operation on the terminal device side in the foregoing method embodiments. The processing unit 1520 is configured to perform a processing-related operation on the terminal device side in the foregoing method embodiments.

In a first possible implementation, the transceiver unit 1510 is configured to receive a wake-up signal from a network device in N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, the first signal includes a part whose power is 0 and a part whose power is not 0, a time length occupied by the part whose signal power is not 0 in the first signal in at least one of the N time units is greater than 0 and less than a length of the time unit, N is an integer greater than 1, N1 and N2 are integers greater than 0 or equal to 0, and N1+N2=N; and the processing unit 1520 is configured to demodulate the wake-up signal.

Optionally, the transceiver unit 1510 is further configured to receive indication information from the network device, where the indication information indicates time information of the first signal, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

Optionally, the indication information is period value configuration information of a synchronization signal, and there is an association relationship between a period value of the synchronization signal and the time information of the first signal.

Optionally, the transceiver unit 1510 is further configured to periodically receive a synchronization signal from the network device, where there is an association relationship between a period value of the synchronization signal and time information of the first signal, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

Optionally, the transceiver unit 1510 is further configured to receive configuration information from the network device, where the configuration information includes an offset value of the part whose signal power is not 0 in the first signal in the time unit, or an offset value of the part whose signal power is 0 in the first signal in the time unit. The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

In a second possible implementation, the transceiver unit 1510 is configured to receive indication information from a network device, where the indication information indicates time information of a first signal, a time length of a part whose signal power is not 0 in the first signal in at least one of N time units is greater than 0 and is less than or equal to a length of the time unit, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by a part whose signal power is 0 in the first signal to the length of the time unit, and the time length occupied by the part whose signal power is 0 in the first signal; and the transceiver unit 1510 is further configured to receive a wake-up signal from the network device in the N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, N is an integer greater than 1, N1 and N2 are integers greater than 0 or equal to 0, and N1+N2=N.

Optionally, the indication information is period value configuration information of a synchronization signal, and there is an association relationship between a period value of the synchronization signal and the time information of the first signal.

Optionally, the transceiver unit 1510 is further configured to receive configuration information from the network device, where the configuration information includes an offset value of the part whose signal power is not 0 in the first signal in the time unit, or an offset value of the part whose signal power is 0 in the first signal in the time unit. The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

The apparatus 1500 may implement the steps or the procedures performed by the terminal device in the method embodiments according to embodiments of this application. The apparatus 1500 may include units configured to perform the methods performed by the terminal device in the method embodiments in embodiments of this application. A specific process in which the units perform the foregoing corresponding steps is described in detail in the foregoing method embodiments. For brevity, details are not described herein again.

In another possible design, the apparatus 1500 may be configured to perform an action performed by the network device in the foregoing method embodiments. In this case, the apparatus 1500 may be the network device or a component of the network device. The transceiver unit 1510 is configured to perform a receiving and sending-related operation on the network device side in the foregoing method embodiments. The processing unit 1520 is configured to perform a processing-related operation on the network device side in the foregoing method embodiments.

In a first possible implementation, the processing unit 1520 is configured to generate a wake-up signal. The transceiver unit 1510 is configured to send the wake-up signal in N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, the first signal includes a part whose power is 0 and a part whose power is not 0, a time length of the part whose signal power is not 0 in the first signal in at least one of the N time units is greater than 0 and less than a length of the time unit, N is an integer greater than 1, N1 and N2 are integers greater than 0 or equal to 0, and N1+N2=N.

Optionally, the transceiver unit 1510 is further configured to send indication information, where the indication information indicates time information of the first signal, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

Optionally, the indication information is period value configuration information of a synchronization signal, and there is an association relationship between a period value of the synchronization signal and the time information of the first signal.

Optionally, the transceiver unit 1510 is further configured to periodically send a synchronization signal, where there is an association relationship between a period value of the synchronization signal and time information of the first signal, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

Optionally, the transceiver unit 1510 is further configured to send configuration information, where the configuration information includes an offset value of the part whose signal power is not 0 in the first signal in the time unit, or an offset value of the part whose signal power is 0 in the first signal in the time unit. The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

In a second possible implementation, the transceiver unit 1510 is configured to send indication information, where the indication information indicates time information of a first signal, a time length of a part whose signal power is not 0 in the first signal in at least one of N time units is greater than 0 and is less than or equal to a length of the time unit, and the time information of the first signal includes at least one of the following: a ratio of the time length occupied by the part whose signal power is not 0 in the first signal to the length of the time unit, the time length occupied by the part whose signal power is not 0 in the first signal, a ratio of a time length occupied by a part whose signal power is 0 in the first signal to the length of the time unit, and the time length occupied by the part whose signal power is 0 in the first signal; and the transceiver unit 1510 is further configured to send a wake-up signal in the N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, N is an integer greater than 1, N1 and N2 are integers greater than 0 or equal to 0, and N1+N2=N.

Optionally, the indication information is period value configuration information of a synchronization signal, and there is an association relationship between a period value of the synchronization signal and the time information of the first signal.

Optionally, the transceiver unit 1510 is further configured to send, by the network device, configuration information, where the configuration information includes an offset value of the part whose signal power is not 0 in the first signal in the time unit, or an offset value of the part whose signal power is 0 in the first signal in the time unit. The offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

The apparatus 1500 may implement the steps or the procedures performed by the network device in the method embodiments according to embodiments of this application. The apparatus 1500 may include units configured to perform the methods performed by the network device in the method embodiments in embodiments of this application. A specific process in which the units perform the foregoing corresponding steps is described in detail in the foregoing method embodiments. For brevity, details are not described herein again.

It should be understood that the apparatus 1500 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another suitable component that supports the described functions. In an optional example, a person skilled in the art may understand that the apparatus 1500 may be specifically the terminal device in the foregoing embodiments, and may be configured to perform the procedures and/or the steps corresponding to the terminal device in the foregoing method embodiments; or the apparatus 1500 may be specifically the network device in the foregoing embodiments, and may be configured to perform the procedures and/or the steps corresponding to the network device in the foregoing method embodiments. To avoid repetition, details are not described herein again.

The apparatus 1500 in each of the foregoing solutions has functions of implementing corresponding steps performed by the communication device (for example, the terminal device or the network device) in the foregoing methods. The function may be implemented by hardware, or may be implemented by hardware executing corresponding software. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit like the processing unit may be replaced with a processor, to respectively perform receiving and sending operations and a related processing operation in each method embodiment.

In addition, the transceiver unit 1510 may alternatively be a transceiver circuit (for example, may include a receiving circuit and a sending circuit), and the processing unit may be a processing circuit.

It should be noted that the apparatus in FIG. 15 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

Refer to FIG. 16. For example, FIG. 16 is a diagram of another communication apparatus 1600 according to an embodiment of this application. The apparatus 1600 includes a processor 1610, and the processor 1610 is coupled to a memory 1620. Optionally, the apparatus 1600 further includes the memory 1620. The memory 1620 is configured to store a computer program or instructions and/or data. The processor 1610 is configured to execute the computer program or the instructions stored in the memory 1620, or read the data stored in the memory 1620, to perform the methods in the foregoing method embodiments.

Optionally, there is at least one processor 1610.

Optionally, there is at least one memory 1620.

Optionally, the memory 1620 and the processor 1610 are integrated together, or are separately disposed.

Optionally, as shown in FIG. 16, the apparatus 1600 further includes a transceiver 1630. The transceiver 1630 is configured to receive and/or send signals. For example, the processor 1610 is configured to control the transceiver 1630 to receive and/or send signals.

In a solution, the apparatus 1600 is configured to implement operations performed by the terminal device in the foregoing method embodiments.

For example, the processor 1610 is configured to execute the computer program or the instructions stored in the memory 1620, to implement related operations of the terminal device in the foregoing method embodiments, for example, the method performed by the terminal device in the embodiment shown in FIG. 9.

In another solution, the apparatus 1600 is configured to implement operations performed by the network device in the foregoing method embodiments.

For example, the processor 1610 is configured to execute the computer program or the instructions stored in the memory 1620, to implement related operations of the network device in the foregoing method embodiments, for example, the method performed by the network device in the embodiment shown in FIG. 9.

It should be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, a discrete gate or transistor logic device, a discrete hardware component, or the like. The general-purpose processor may be a microprocessor, or the processor may be any conventional processor, or the like.

It should be further understood that the memory mentioned in this embodiment of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus dynamic random access memory (direct rambus RAM, DR RAM).

It should be noted that when the processor is a general-purpose processor, a DSP, an ASIC, an FPGA, another programmable logic device, a discrete gate or transistor logic device, or a discrete hardware component, the memory (storage module) may be integrated into the processor.

It should further be noted that the memory described in this specification aims to include but is not limited to these memories and any memory of another suitable type.

Refer to FIG. 17. For example, FIG. 17 is a diagram of a chip system 1700 according to an embodiment of this application. The chip system 1700 (or may be referred to as a processing system) includes a logic circuit 1710 and an input/output interface (input/output interface) 1720.

The logic circuit 1710 may be a processing circuit in the chip system 1700. The logic circuit 1710 may be coupled to and connected to a storage unit, and invoke instructions in the storage unit, to enable the chip system 1700 to implement the methods and functions in embodiments of this application. The input/output interface 1720 may be an input/output circuit in the chip system 1700, and outputs information processed by the chip system 1700, or inputs to-be-processed data or signaling information into the chip system 1700 for processing.

Specifically, for example, if the chip system 1700 is installed in a terminal device, the logic circuit 1710 is coupled to the input/output interface 1720, and the input/output interface 1720 may input a wake-up signal to the logic circuit 1710 for processing.

In a solution, the chip system 1700 is configured to implement operations performed by the terminal device in the foregoing method embodiments.

For example, the logic circuit 1710 is configured to implement a processing-related operation performed by the terminal device in the foregoing method embodiments, for example, a processing-related operation performed by the terminal device in the embodiment shown in FIG. 9. The input/output interface 1720 is configured to implement a sending and/or receiving-related operation performed by the terminal device in the foregoing method embodiments, for example, the sending and/or receiving-related operation performed by the terminal device in the embodiment shown in FIG. 9.

In another solution, the chip system 1700 is configured to implement operations performed by the network device in the foregoing method embodiments.

For example, the logic circuit 1710 is configured to implement a processing-related operation performed by the network device in the foregoing method embodiments, for example, a processing-related operation performed by the network device in the embodiment shown in FIG. 9. The input/output interface 1720 is configured to implement a sending and/or receiving-related operation performed by the network device in the foregoing method embodiments, for example, the sending and/or receiving-related operation performed by the network device in the embodiment shown in FIG. 9.

An embodiment of this application further provides a computer-readable storage medium. The computer-readable storage medium stores computer instructions for implementing the method performed by the device in the foregoing method embodiments.

For example, when the computer program is executed by a computer, the computer is enabled to implement the method performed by the terminal device in the foregoing method embodiments.

For another example, when the computer program is executed by a computer, the computer is enabled to implement the method performed by the network device in the foregoing method embodiments.

An embodiment of this application further provides a computer program product, including instructions. When the instructions are executed by a computer, the method performed by the terminal device or the network device in the foregoing method embodiments is implemented.

An embodiment of this application further provides a communication system. The communication system includes the terminal device and the network device in the foregoing embodiments.

For explanations and beneficial effects of related content of any one of the apparatuses provided above, refer to the corresponding method embodiment provided above. Details are not described herein again.

In the several embodiments provided in this application, it should be understood that the disclosed apparatus and method may be implemented in other manners. For example, the described apparatus embodiment is merely an example. For example, division into the units is merely logical function division and may be other division in an actual implementation. For example, at least two units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement the embodiments, all or some of the embodiments may be implemented in a form of a computer program product. The computer program product includes at least one computer instruction. When the computer program instructions are loaded and executed on a computer, the procedure or functions according to embodiments of this application are all or partially generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating at least one usable medium. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving, by a terminal device, a wake-up signal from a network device in N time units, wherein the wake-up signal comprises N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, the first signal comprises a part whose power is 0 and a part whose power is not 0, a time length occupied by the part whose signal power is not 0 in the first signal in at least one of the N time units is greater than 0 and less than a length of the time unit, N is an integer greater than 1, N1 and N2 are integers greater than 0 or equal to 0, and N1+N2=N; and
   demodulating, by the terminal device, the wake-up signal.

2. The method according to claim 1, wherein the method further comprises:
   receiving, by the terminal device, indication information from the network device, wherein the indication information indicates time information of the first signal, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

3. The method according to claim 2, wherein the indication information is period value configuration information of a synchronization signal, and there is an association relationship between a period value of the synchronization signal and the time information of the first signal.

4. The method according to claim 1, wherein the method further comprises:
   periodically receiving, by the terminal device, a synchronization signal from the network device, wherein there is an association relationship between a period value of the synchronization signal and time information of the first signal, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

5. The method according to any one of claims 1 to 4, wherein the method further comprises:

receiving, by the terminal device, configuration information from the network device, wherein the configuration information comprises an offset value of the part whose signal power is not 0 in the first signal in the time unit, or an offset value of the part whose signal power is 0 in the first signal in the time unit, wherein

the offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and

the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

6. A communication method, comprising:

generating, by a network device, a wake-up signal; and

sending, by the network device, the wake-up signal in N time units, wherein the wake-up signal comprises N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, the first signal comprises a part whose power is 0 and a part whose power is not 0, a time length of the part whose signal power is not 0 in the first signal in at least one of the N time units is greater than 0 and less than a length of the time unit, N is an integer greater than 1, N1 and N2 are integers greater than 0 or equal to 0, and N1+N2=N.

7. The method according to claim 6, wherein the method further comprises:
sending, by the network device, indication information, wherein the indication information indicates time information of the first signal, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

8. The method according to claim 7, wherein the indication information is period value configuration information of a synchronization signal, and there is an association relationship between a period value of the synchronization signal and the time information of the first signal.

9. The method according to claim 6, wherein the method further comprises:
periodically sending, by the network device, a synchronization signal, wherein there is an association relationship between a period value of the synchronization signal and time information of the first signal, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

10. The method according to any one of claims 6 to 9, wherein the method further comprises:

sending, by the network device, configuration information, wherein the configuration information comprises an offset value of the part whose signal power is not 0 in the first signal in the time unit, or an offset value of the part whose signal power is 0 in the first signal in the time unit, wherein

the offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and

the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

11.  A communication method, comprising:

receiving, by a terminal device, indication information from a network device, wherein the indication information indicates time information of a first signal, a time length of a part whose signal power is not 0 in the first signal in at least one of N time units is greater than 0 and is less than or equal to a length of the time unit, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by a part whose signal power is 0 in the first signal to the length of the time unit, and the time length occupied by the part whose signal power is 0 in the first signal; and

receiving, by the terminal device, a wake-up signal from the network device in the N time units, wherein the wake-up signal comprises N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, N is an integer greater than 1, N1 and N2 are integers greater than 0 or equal to 0, and N1+N2=N.

12.  The method according to claim 11, wherein the indication information is period value configuration information of a synchronization signal, and there is an association relationship between a period value of the synchronization signal and the time information of the first signal.

13.  The method according to claim 11 or 12, wherein the method further comprises:

receiving, by the terminal device, configuration information from the network device, wherein the configuration information comprises an offset value of the part whose signal power is not 0 in the first signal in the time unit, or an offset value of the part whose signal power is 0 in the first signal in the time unit, wherein

the offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and

the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

14.  A communication method, comprising:

sending, by a network device, indication information, wherein the indication information indicates time information of a first signal, a time length of a part whose signal power is not 0 in the first signal in at least one of N time units is greater than 0 and is less than or equal to a length of the time unit, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by a part whose signal power is 0 in the first signal to the length of the time unit, and the time length occupied by the part whose signal power is 0 in the first signal; and

sending, by the network device, a wake-up signal in the N time units, wherein the wake-up signal comprises N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, N is an integer greater than 1, N1 and N2 are integers greater than 0 or equal to 0, and N1+N2=N.

15. The method according to claim 14, wherein the indication information is period value configuration information of a synchronization signal, and there is an association relationship between a period value of the synchronization signal and the time information of the first signal.

16. The method according to claim 14 or 15, wherein the method further comprises:

sending, by the network device, configuration information, wherein the configuration information comprises an offset value of the part whose signal power is not 0 in the first signal in the time unit, or an offset value of the part whose signal power is 0 in the first signal in the time unit, wherein
the offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and
the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

17. A communication apparatus, comprising a transceiver unit and a processing unit, wherein

the transceiver unit is configured to receive a wake-up signal from a network device in N time units, wherein the wake-up signal comprises N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, the first signal comprises a part whose power is 0 and a part whose power is not 0, a time length occupied by the part whose signal power is not 0 in the first signal in at least one of the N time units is greater than 0 and less than a length of the time unit, N is an integer greater than 1, N1 and N2 are integers greater than 0 or equal to 0, and N1+N2=N; and
the processing unit is configured to demodulate the wake-up signal.

18. The apparatus according to claim 17, wherein
the transceiver unit is further configured to receive indication information from the network device, wherein the indication information indicates time information of the first signal, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

19. The apparatus according to claim 18, wherein the indication information is period value configuration information of a synchronization signal, and there is an association relationship between a period value of the synchronization signal and the time information of the first signal.

20. The apparatus according to claim 17, wherein
the transceiver unit is further configured to periodically receive a synchronization signal from the network device, wherein there is an association relationship between a period value of the synchronization signal and time information of the first signal, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

**21.** The apparatus according to any one of claims 17 to 20, wherein

the transceiver unit is further configured to receive configuration information from the network device, wherein the configuration information comprises an offset value of the part whose signal power is not 0 in the first signal in the time unit, or an offset value of the part whose signal power is 0 in the first signal in the time unit, wherein the offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

**22.** A communication apparatus, comprising a transceiver unit and a processing unit, wherein

the processing unit is configured to generate a wake-up signal; and the transceiver unit is configured to send the wake-up signal in N time units, wherein the wake-up signal comprises N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, the first signal comprises a part whose power is 0 and a part whose power is not 0, a time length of the part whose signal power is not 0 in the first signal in at least one of the N time units is greater than 0 and less than a length of the time unit, N is an integer greater than 1, N1 and N2 are integers greater than 0 or equal to 0, and N1+N2=N.

**23.** The apparatus according to claim 22, wherein the transceiver unit is further configured to send indication information, wherein the indication information indicates time information of the first signal, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

**24.** The apparatus according to claim 23, wherein the indication information is period value configuration information of a synchronization signal, and there is an association relationship between a period value of the synchronization signal and the time information of the first signal.

**25.** The apparatus according to claim 22, wherein the transceiver unit is further configured to periodically send a synchronization signal, wherein there is an association relationship between a period value of the synchronization signal and time information of the first signal, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by the part whose signal power is 0 in the first signal to the length of the time unit, and the time length occupied by the part whose signal power is 0 in the first signal.

**26.** The apparatus according to any one of claims 22 to 25, wherein

the transceiver unit is further configured to send configuration information, wherein the configuration information comprises an offset value of the part whose signal power is not 0 in the first signal in the time unit, or an offset value of the part whose signal power is 0 in the first signal in the time unit, wherein the offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and

the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

27. A communication apparatus, comprising a transceiver unit, wherein

the transceiver unit is configured to receive indication information from a network device, wherein the indication information indicates time information of a first signal, a time length of a part whose signal power is not 0 in the first signal in at least one of N time units is greater than 0 and is less than or equal to a length of the time unit, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by a part whose signal power is 0 in the first signal to the length of the time unit, and the time length occupied by the part whose signal power is 0 in the first signal; and

the transceiver unit is further configured to receive a wake-up signal from the network device in the N time units, wherein the wake-up signal comprises N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, N is an integer greater than 1, N1 and N2 are integers greater than 0 or equal to 0, and N1+N2=N.

28. The apparatus according to claim 27, wherein the indication information is period value configuration information of a synchronization signal, and there is an association relationship between a period value of the synchronization signal and the time information of the first signal.

29. The apparatus according to claim 27 or 28, wherein

the transceiver unit is further configured to receive configuration information from the network device, wherein the configuration information comprises an offset value of the part whose signal power is not 0 in the first signal in the time unit, or an offset value of the part whose signal power is 0 in the first signal in the time unit, wherein

the offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and

the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

30. A communication apparatus, comprising a transceiver unit, wherein

the transceiver unit is configured to send indication information, wherein the indication information indicates time information of a first signal, a time length of a part whose signal power is not 0 in the first signal in at least one of N time units is greater than 0 and is less than or equal to a length of the time unit, and the time information of the first signal comprises at least one of the following: a ratio of the time length occupied by the part whose signal power is not 0 in the first signal to the length of the time unit, the time length occupied by the part whose signal power is not 0 in the first signal, a ratio of a time length occupied by a part whose signal power is 0 in the first signal to the length of the time unit, and the time length occupied by the part whose signal power is 0 in the first signal; and

the transceiver unit is further configured to send a wake-up signal in the N time units, wherein the wake-up signal comprises N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, N is an integer greater than 1, N1 and N2 are integers greater than 0 or equal to 0, and N1+N2=N.

31. The apparatus according to claim 30, wherein the indication information is period value configuration information of a synchronization signal, and there is an association relationship between a period value of the synchronization signal and the time information of the first signal.

32. The apparatus according to claim 30 or 31, wherein

the transceiver unit is further configured to send configuration information, wherein the configuration information comprises an offset value of the part whose signal power is not 0 in the first signal in the time unit, or an offset value of the part whose signal power is 0 in the first signal in the time unit, wherein
the offset value of the part whose signal power is not 0 in the first signal in the time unit is any one of the following: an offset value between a start location of the part whose signal power is not 0 in the first signal and a start location of the time unit, an offset value between the start location of the part whose signal power is not 0 in the first signal and an end location of the time unit, an offset value between an end location of the part whose signal power is not 0 in the first signal and the start location of the time unit, and an offset value between the end location of the part whose signal power is not 0 in the first signal and the end location of the time unit; and
the offset value of the part whose signal power is 0 in the first signal in the time unit is any one of the following: an offset value between a start location of the part whose signal power is 0 in the first signal and the start location of the time unit, an offset value between the start location of the part whose signal power is 0 in the first signal and the end location of the time unit, an offset value between an end location of the part whose signal power is 0 in the first signal and the start location of the time unit, and an offset value between the end location of the part whose signal power is 0 in the first signal and the end location of the time unit.

33. A communication apparatus, comprising a processor, wherein the processor is configured to execute a computer program or instructions stored in a memory, so that the apparatus is enabled to perform the method according to any one of claims 1 to 16.

34. The apparatus according to claim 33, wherein the apparatus further comprises the memory and/or a communication interface, and the communication interface is coupled to the processor; and
the communication interface is configured to input and/or output information.

35. The apparatus according to any one of claims 17 to 34, wherein the communication apparatus is any one of the following: a chip, a chip system, or a circuit.

36. A computer-readable storage medium, wherein the computer-readable storage medium stores a computer program or instructions; and when the computer program or the instructions are run on a communication apparatus, the communication apparatus is enabled to perform the method according to any one of claims 1 to 16.

37. A computer program product, wherein the computer program product comprises a computer program or instructions for performing the method according to any one of claims 1 to 16.

38. A chip, wherein the chip is coupled to a memory, and is configured to read and execute program instructions stored in the memory, to implement the method according to any one of claims 1 to 16.

FIG. 1

FIG. 2

FIG. 3

1　　　　　　　0　　　　　　　1　　　　　　　0

- - - - - - - - - - - - - - - - - - - - - - - - - - - - - Threshold

t1　　t2　　t3

## FIG. 4

Original bits　　0　　　0　　1　　　0　　　0　　1　　　0　　1　　　1　　　0

Encoded bits　1 0　　1 0　0 1　　1 0　1 0　　0 1　　1 0　0 1　　0 1　1 0

Modulated
waveform

## FIG. 5

Sampling points

FIG. 6

Noise-free                                          Noisy

FIG. 7

Noise-free

Noisy

FIG. 8

900

A terminal device receives a wake-up signal from a network device in N time units, where the wake-up signal includes N1 first signals and N2 second signals, the first signal indicates a first bit value, the second signal indicates a second bit value, a signal power of the first signal is not 0, a signal power of the second signal is 0, each of the N1 first signals occupies one of the N time units, each of the N2 second signals occupies one of the N time units, a time length occupied by a part whose signal power is not 0 in the first signal in at least one of the N time units is greater than 0 and less than or equal to a length of the time unit, N is an integer greater than 1, N1 and N2 are integers greater than 0 or equal to 0, and N1+N2=N      910

The terminal device demodulates the wake-up signal      920

FIG. 9

ISI caused by a multi-path delay

ISI caused by the multi-path delay

(1)

(2)

FIG. 10

First signal    Second signal

(1)

A part    A part    Second
whose    whose    signal
power is  power is
not 0 in  0 in the
the first  first
signal    signal

(2)

FIG. 11

$E_S+TN$        TN

Comparison interval corresponding to a first signal

Comparison interval corresponding to a second signal

(1)

$E_S+TN/2$       TN/2

Comparison interval corresponding to the first signal

Comparison interval corresponding to the second signal

(2)

$E_S+TN$        TN

Comparison interval corresponding to the first signal

Comparison interval corresponding to the second signal

(3)

FIG. 12

One OFDM symbol

ISI caused by a multi-path delay

OOK symbols obtained through OOK modulation

(1)

One OFDM symbol

ISI caused by the multi-path delay

OOK symbols obtained through OOK modulation

(2)

FIG. 13

One OFDM symbol

ISI caused by a multi-path delay

CP

OOK symbols obtained through OOK modulation

(1)

One OFDM symbol

ISI caused by the multi-path delay

CP

OOK symbols obtained through OOK modulation

(2)

FIG. 14

1500

Transceiver unit 1510

Processing unit 1520

FIG. 15

1600

Processor 1610

Transceiver 1630

Memory 1620

FIG. 16

Chip system 1700

Logic circuit 1710

Input/Output interface 1720

FIG. 17

## INTERNATIONAL SEARCH REPORT

| International application No. |
| --- |
| **PCT/CN2023/117153** |

**A. CLASSIFICATION OF SUBJECT MATTER**

H04L27/04(2006.01)i; H04W52/02(2009.01)i

According to International Patent Classification (IPC) or to both national classification and IPC

**B. FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

IEEE, CNTXT, ENTXTC, WPABSC, DWPI: 唤醒信号, 开关信号, 低, 节省, 功率, 时间, 长度, 短, 集中, 能量, 噪声, 信噪比, 曼彻斯特编码, 同步信号, 指示, 配置, 比例, 位置, 偏移, OOK, WUS, low, save, power, time, OFDM, length, short, concentrate, energy, noise, SNR, Manchester, encoding, indicat+, synchronization signal, configuration, proportion, position, ratio, offset

**C. DOCUMENTS CONSIDERED TO BE RELEVANT**

| Category* | Citation of document, with indication, where appropriate, of the relevant passages | Relevant to claim No. |
| --- | --- | --- |
| X | US 2020313941 A1 (TELEFONAKTIEBOLAGET LM ERICSSON (PUBL)) 01 October 2020 (2020-10-01) <br> description, paragraphs 44-66, and figures 1-5 | 1-38 |
| A | CN 111226423 A (TELEFONAKTIEBOLAGET LM ERICSSON (PUBL)) 02 June 2020 (2020-06-02) <br> entire document | 1-38 |
| A | CN 111343120 A (CHENGDU HUAWEI TECHNOLOGIES CO., LTD.) 26 June 2020 (2020-06-26) <br> entire document | 1-38 |
| A | CN 111448829 A (HUAWEI TECHNOLOGIES CO., LTD.) 24 July 2020 (2020-07-24) <br> entire document | 1-38 |
| A | CN 113498598 A (IDAC HOLDINGS, INC.) 12 October 2021 (2021-10-12) <br> entire document | 1-38 |

☐ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **23 November 2023** | **28 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/117153**

| Patent document cited in search report | | | Publication date (day/month/year) | Patent family member(s) | | | Publication date (day/month/year) |
|---|---|---|---|---|---|---|---|
| US | 2020313941 | A1 | 01 October 2020 | EP | 3704838 | A1 | 09 September 2020 |
| | | | | WO | 2019086177 | A1 | 09 May 2019 |
| CN | 111226423 | A | 02 June 2020 | JP | 2020537850 | A | 24 December 2020 |
| | | | | PH | 12020550811 | A1 | 17 May 2021 |
| | | | | EP | 3698524 | A1 | 26 August 2020 |
| | | | | WO | 2019076596 | A1 | 25 April 2019 |
| | | | | US | 2021226828 | A1 | 22 July 2021 |
| | | | | BR | 112020007601 | A2 | 29 September 2020 |
| CN | 111343120 | A | 26 June 2020 | WO | 2020125455 | A1 | 25 June 2020 |
| CN | 111448829 | A | 24 July 2020 | US | 2020275368 | A1 | 27 August 2020 |
| | | | | WO | 2019120496 | A1 | 27 June 2019 |
| | | | | EP | 3689039 | A1 | 05 August 2020 |
| CN | 113498598 | A | 12 October 2021 | WO | 2020172549 | A1 | 27 August 2020 |
| | | | | US | 2022095228 | A1 | 24 March 2022 |
| | | | | EP | 3928482 | A1 | 29 December 2021 |
| | | | | JP | 2022521331 | A | 06 April 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211132097
- CN 202211167586